# EUROPEAN PATENT APPLICATION

(11) **EP 3 345 948 A1**
(43) Date of publication of application: **11.07.2018**
(21) Application number: 16841893.7
(22) Date of filing: 31.08.2016
(51) Int. Cl.: C08G 18/80

(54) **BLOCKED ISOCYANATE COMPOSITION, PREPOLYMER COMPOSITION, METHOD FOR PRODUCING THESE, AND THERMALLY DISSOCIATIVE BLOCKING AGENT OF BLOCKED ISOCYANATE COMPOSITION**

(30) Priority: 31.08.2015 JP 2015171339
(71) Applicant: Daiei Sangyo Kaisha, Ltd., Nagoya-shi, Aichi 453-0041 (JP)
(72) Inventor: OKAMOTO, Yasushi, Nagoya-shi Aichi 453-0041 (JP); SUZUKI, Shizuka, Nagoya-shi Aichi 453-0041 (JP)
(74) Representative: Keilitz, Wolfgang
(86) International application number: PCT/JP2016/075455
(87) International publication number: WO 2017/038863

(57) **Abstract**

[Problem] To impart a low temperature thermosetting property surpassing a prepolymer of a phenolic resin to a prepolymer as a mixture of a blocked isocyanate compound and an isocyanate reactive compound, while preventing harmful influence on the environment at the time of thermal curing, and to provide a thermosetting plastic as a thermally cured product thereof to the market at a cost comparable to the phenolic resin, while restraining divergence of the formaldehyde.

[Solution] As a thermally dissociative blocking agent capable of dissociating at a very low temperature by reacting with an isocyanate compound, used is a blocked isocyanate composition composed of at least one kind of a thermally dissociative blocking agent selected from a group consisting of an ammonia and an ammonium salt. The thermally dissociative blocking agent blocks an isocyanate group of an isocyanate compound by a urea terminal.

## Description

### TECHNICAL FIELD

The present invention relates to a blocked isocyanate composition, a prepolymer composition that is a mixture of a blocked isocyanate compound and a isocyanate-reactive compound, and a method for manufacturing them, as well as to a thermally dissociative the blocking agent of the blocked isocyanate composition. In particular, the present invention relates to a blocked isocyanate composition of a low-temperature dissociation type, a prepolymer composition of a low temperature thermosetting type that contains the blocked isocyanate composition, and a method for manufacturing them, as well as to a thermally dissociative blocking agent of a low-temperature dissociation type that is used for the blocked isocyanate composition.

### BACKGROUND ART

Conventionally, for heat insulating materials, plywoods, wooden boards, electrical appliances or automobile interior parts, all of which require a strength, a phenolic resin and a prepolymer of a phenol resin have been widely used. However, the phenolic resin includes a formaldehyde in the raw material. Therefore, a product using the phenol resin presents a problem that the product generates a sick building syndrome or the like caused by divergence of the formaldehyde diffused from the product.

Therefore, in recent years, as a replacement for the phenol resin, there has been being used a thermosetting plastic made by thermally curing a prepolymer that is a mixture of a isocyanate compound and a isocyanate-reactive compound (hereinafter, for convenience of description, may be referred to as "isocyanate prepolymer".) for paper products, wooden products, electrical appliances, automotive interior parts, and the like. In the present application documents, the term "isocyanate-reactive compound" is used in the sense of a compound having a high reactivity with the isocyanate compound (typically a polyol of a saccharide or the like). However, the term "isocyanate-reactive compound" is used in the sense corresponding to the term "active hydrogen compound".

The isocyanate prepolymer as an uncured product of the thermosetting plastic is adsorbed or impregnated or the like onto a paper, a wood, a glass, a plastic, a metal, or the like, by a method of coating, dipping or spraying. Then, it is heated to a predetermined temperature and is further pressurized to a predetermined pressure. Thereby, adhesion, curing and molding proceed therein, so that a thermosetting plastic and its molded product are formed.

Moreover, the isocyanate prepolymer is added with a variety of catalyst to adjust a reaction rate. Furthermore, a foaming agent, a filler material or a polyol other than a biological system is added to give light weight, heat insulation, rigidity or flexibility.

### PRIOR ART LITERATURE

### PATENT LITERATURE

Patent Document 1: JP-A-2008-179736 Publication
Patent Document 2: JP-A-S50-46994 Publication
Patent Document 3: JP-A-S56-151753 Publication
Patent Document 4: Japanese Patent No. 3002768 Publication
Patent Document 5: Japanese Patent No. 3199150 Publication
Patent Document 6: JP-B-H2-14948 Publication
Patent Document 7: WO 2014/045620 International Publication

On the other hand, a terminal isocyanate group of the isocyanate compound as a raw material for the isocyanate prepolymer has a high reactivity to easily react with the active hydroxyl group. Accordingly, the isocyanate prepolymer has a characteristic that a self-curing progresses even at a room temperature. Therefore, it is an issue for the isocyanate prepolymer how to secure a pot life (lifetime) from the viewpoint of practical use.

Here, Patent Document 1 relates to a heat curing process of a thermosetting plastic composition mixing a sugar and a isocyanate as a isocyanate-reactive compound (equivalent to the isocyanate prepolymer). It discloses suppressing progress of self-curing at a room temperature of the isocyanate prepolymer by using an inactive or low-active sugar as the sugar. In detail, according to the disclosure of Patent Document 1, when the inactive or low-active sugar (monosaccharide, disaccharide, oligosaccharide) is in a crystalline state (crystalline powder state), the hydroxyl group is less active and has poor reactivity. Therefore, it is possible to store and keep such sugar in a mixed state with the isocyanate compound. Moreover, in this heat curing process, the sugar in the crystalline state is melted by heating. Consequently, the hydroxyl group of the sugar is activated to react rapidly with the terminal isocyanate group of the isocyanate compound, including an effect of a catalyst. Still, even during the sugar is maintained in the crystalline state, activity of the hydroxyl group is slightly observed at a surface of the sugar. Thus, the self-curing of the isocyanate prepolymer progresses, so that the pot life (lifetime) of the isocyanate prepolymer is considered to be only about 1 week.

In order to suppress the self-curing of the isocyanate prepolymer, it is possible to restrain the reactivity of the isocyanate group by blocking the isocyanate group of the isocyanate compound with a blocking agent used to block a terminal isocyanate group of a prepolymer of an urethane resin, such as a phenol, an ε-caprolactam, or a 2-butanone oxime. However, these blocking agents have a high thermal dissociation temperature. Therefore, they requires a heating condition of 3 minutes or more at 180 degrees centigrade in order to make the isocyanate prepolymer reach a practical cure degree. In contrast, a prepolymer of the phenol resin provides a practical cure degree in a heating condition of less than 3 minutes at 160 degrees centigrade. Thus, in terms of performing practical curing with a heating condition at a lower temperature, the prepolymer of the phenolic resin is superior to the isocyanate prepolymer.

In addition, Patent Document 2, Patent Document 3, Patent Document 4 and Patent Document 5 show examples that use a blocking agent such as a hydrogen sulfite salt or a disulfurous acid salt that thermally dissociates at 60 degrees centigrade or more, in order to give a prepolymer of an urethane resin a low-temperature curing property. However, the blocking agent such as the hydrogen sulfite salt keeps a sulfurous acid in a cured material and generates a toxic sulfur dioxide gas during thermal decomposition thereof. Thus, there is a fear that it has a significant impact on the environment. In Patent Document 6, a blocking agent of a polyamine compound or a thiol compound is shown. However, according to this example, a sulfurous acid gas is generated at the time of manufacturing or at the time of dissociating of the blocking agent. Therefore, it has little practical use.

Moreover, in Patent Document 7, a blocked polyisocyanate composition, a prepolymer composition that is a mixture of a blocked polyisocyanate compound and a polyisocyanate-reactive compound, and a method for manufacturing them, as well as to a thermally dissociative blocking agent of the blocked polyisocyanate composition. An object of the invention of Patent Document 7 is to impart a low temperature thermosetting property surpassing the prepolymer of the phenolic resin to a prepolymer as a mixture of a blocked polyisocyanate compound and a polyisocyanate reactive compound, to suppress generation of a toxic gas impacting on the environment and an unpleasant odor at the time of manufacturing or at the time of thermal curing, to provide a thermosetting plastic as a thermally cured product thereof to the market at a cost comparable to the phenolic resin, and to restrain divergence of the formaldehyde (see paragraph [0011]. In order to achieve he above-stated object, the invention of Patent Document 7 uses, as a thermally dissociative blocking agent that reacts with the polyisocyanate compound to be dissociated at a very low temperature , (1) "a carbonate-based thermally dissociative blocking agent" composed of one kind or two or more kinds of the carbonate, the hydrogen carbonate or the percarbonate of the alkali metal or the ammonium, or (2) "a phosphate-based thermally dissociative blocking agent" composed of one kind or two or more kinds of the phosphate, the hydrogen phosphate salt or the dihydrogen phosphate salt of the alkali metal (see paragraph [0030]). Thus, in the invention of Patent Document 7, it was confirmed by an experiment that the carbonate-based thermally dissociative blocking agent consisting of the hydrogen carbonate of the alkali metal (a sodium hydrogen carbonate in an example of the experiment) surely performed a blocking and/or protecting effect of the terminal and/or free NCO groups of the blocked polyisocyanate compound and dissociative effect of the blocking agent at a predetermined low temperature range in the heating (paragraphs [0037] to [0039]). Moreover, in the invention of Patent Document 7, it was confirmed by an experiment that a thermally dissociative phenomenon was identified at a temperature similar to that of the hydrogen carbonate in case of using the carbonate, the percarbonate, the phosphate, the hydrogen phosphate salt, or the dihydrogen phosphate salt, in place of the hydrogen carbonate (paragraph [0040]).

On the other hand, in the invention of Patent Document 7, the carbonate group of each thermally dissociative blocking agent protects (blocks) the terminal isocyanate group (NCO group) of the polyisocyanate compound in case of the carbonate-based thermally dissociative blocking agent (paragraphs [0048] and [0089]). The phosphate group of each thermally dissociative blocking agent protects (blocks) the terminal isocyanate group (NCO group) of the polyisocyanate compound in case of the phosphate-based thermally dissociative blocking agent (paragraphs [0072] and [0102]). That is, the invention of Patent Document 7 is just an invention focusing on a thermally dissociative blocking agent in which a terminal structure becomes a carbonate-terminal structure (or a phosphate-terminal structure). Therefore, it uses the carbonate-based thermally dissociative blocking agent or the phosphate-based thermally dissociative blocking agent as the thermally dissociative blocking agent so as to dissociate the carbonate group or the phosphate group in the solvent.

### SUMMARY OF THE INVENTION

### PROBLEM TO BE SOLVED BY THE INVENTION

In view of the above, an object of the present invention is to provide a blocked isocyanate composition, a prepolymer composition and a method for manufacturing them each of which is able to impart a low temperature thermosetting property surpassing the prepolymer of the phenolic resin to a prepolymer as a mixture of a blocked isocyanate compound and an isocyanate reactive compound, while preventing harmful influence on the environment at the time of manufacturing or at the time of thermal curing, and each of which is capable of providing a thermosetting plastic as a thermally cured product thereof to the market at a cost comparable to the phenolic resin, while restraining divergence of the formaldehyde, and in each of which blocking of the blocking agent is released at a low temperature that is in a lower temperature than that of the conventional art, while preventing extra residue such as a metal from being generated, and to provide a thermally dissociative blocking agent of low temperature dissociation type having a particularly suitable use as a blocking agent of the above blocked isocyanate composition.

### SOLUTION TO PROBLEM

A blocked isocyanate composition according to claim 1 is a blocked isocyanate composition that is synthesized from an isocyanate compound and a thermally dissociative blocking agent, and is characterized in that the thermally dissociative blocking agent is at least one kind of thermally dissociative blocking agent selected from a group consisting of an ammonia and an ammonium salt, and in that the thermally dissociative blocking agent blocks an isocyanate group of the isocyanate compound by an urea terminal. In the present invention, the "urea terminal" is defined as one in which a terminal structure of the blocked isocyanate composition becomes a structure of "-NH-CO-NH₂" (as shown in a general formula (1) as mentioned below and as shown in a chemical formula (1) as mentioned below).

A blocked isocyanate composition according to claim 2 is characterized in that the thermally dissociative blocking agent is an ammonia in the constitution of claim 1.

A blocked isocyanate composition according to claim 3 is characterized in that the thermally dissociative blocking agent is an ammonium salt in the constitution of claim 1.

A blocked isocyanate composition according to claim 4 is characterized in that an addition amount of the thermally dissociative blocking agent is 0.1 to 2.0 mol to 1 mol of the isocyanate compound in terms of an NCO group content in the constitution of one of claims 1 to 3.

A blocked isocyanate composition according to claim 5 is characterized in that a dissociation temperature of the thermally dissociative blocking agent is in a range of 60 to 150 degrees centigrade in the constitution of one of claims 1 to 4.

A blocked isocyanate composition according to claim 6 is characterized in that the isocyanate compound is one that blocks the isocyanate group by the urea terminal and that chain-extends molecular chains thereof with each other by a chain extender (may be referred to as "a chain-extended isocyanate compound" hereafter) in the constitution of one of claims 1 to 5.

A blocked isocyanate composition according to claim 7 is characterized in that the isocyanate compound is one that blocks the isocyanate group by the urea terminal without chain-extending molecular chains thereof by a chain extender (may be referred to as "a non-chain-extended isocyanate compound" hereafter) in the constitution of one of claims 1 to 5.

A blocked isocyanate composition according to claim 8 is a manufacturing method of manufacturing a blocked isocyanate composition as recited in one of claims 1 to 7 in an aqueous solution, and is characterized in that the aqueous solvent comprises either a water or an aqueous mixed solvent combining a water with a polar organic solvent and in that an addition amount of the polar organic solvent is in a range of 1 to 500 parts to 100 parts of the water in the aqueous mixed solvent in case the aqueous solvent consists of the aqueous mixed solvent.

A manufacturing method of a blocked isocyanate composition according to claim 9 is characterized in that a temperature of the aqueous mixed solvent is in a temperature range of 0 to 60 degrees centigrade in the constitution of claim 8.

A thermally dissociative blocking agent of a blocked isocyanate composition according to claim 10 is a thermally dissociative blocking agent of a blocked isocyanate composition that protects an isocyanate group of an isocyanate compound, and is characterized in that it consists of at least one kind selected from a group consisting of an ammonia and an ammonium salt, and in that it blocks an isocyanate group of the isocyanate compound by an urea terminal.

A blocked isocyanate composition according to claim 11 is one that is synthesized from an isocyanate compound and a thermally dissociative blocking agent in a predetermined solvent, and is characterized in that the thermally dissociative blocking agent is an ammonia-based thermally dissociative blocking agent that dissociates NH₃ group in the solvent, and in that the thermally dissociative blocking agent blocks an isocyanate group of the isocyanate compound by a terminal structure represented by a following formula, "-R-NH-CO-NH₂".

A blocked isocyanate composition according to claim 12 is characterized in that the thermally dissociative blocking agent consists of an ammonium salt of an organic acid in the constitution of claim 11.

A blocked isocyanate composition according to claim 13 is characterized in that the thermally dissociative blocking agent consists of an ammonium acetate or an ammonium oxalate in the constitution of claim 12.

A blocked isocyanate composition according to claim 14 is characterized in that a dissociation temperature of the thermally dissociative blocking agent is in a range of 60 to 150 degrees centigrade in the constitution of one of claim 11 to claim 13.

### EFFECTS OF INVENTION

According to the present invention, it is possible to provide a blocked isocyanate composition, a prepolymer composition and a method for manufacturing them each of which is able to impart a low temperature thermosetting property surpassing the prepolymer of the phenolic resin to a prepolymer as a mixture of a blocked isocyanate compound and an isocyanate reactive compound, while preventing harmful influence on the environment at the time of manufacturing or at the time of thermal curing, and each of which is capable of providing a thermosetting plastic as a thermally cured product thereof to the market at a cost comparable to the phenolic resin, while restraining divergence of the formaldehyde, and to provide a thermally dissociative blocking agent of low temperature dissociation type having a particularly suitable use as a blocking agent of the above blocked isocyanate composition.

In particular, according to the present invention, the ammonia or the ammonium salt, which are used as the thermally dissociative blocking agent for the isocyanate compound, are very inexpensive in comparison with a thermally dissociative blocking agent to be used as a blocking agent for a prepolymer of an urethane resin. The prepolymer consisting of the blocked isocyanate and the polyol is inexpensive even in comparison with the phenolic resin or the prepolymer of the phenolic resin.

Moreover, according to the present invention, in the production of the thermosetting plastic, an existing manufacturing process for the phenolic resin can be used as it is (i.e. various steps of a raw material mixing step for mixing a polyol or an amine as a main material, a blocked isocyanate compound as a curing agent, and, if necessary, another material such as a catalyst; a mold filling step for filling the mixed material into a mold, a heating/curing step for thermally curing the mixed material filled in the mold, a cooling step for cooling the cured material, and the like). Consequently, it is possible to achieve dissemination thereof as an alternative to the phenolic resin. Moreover, in the blocked isocyanate composition and the prepolymer composition of the present invention, the thermal curing progresses in a very low temperature range (80 to 150 degrees centigrade). Thus, it can be expected that an energy is significantly reduced at the time of manufacturing the thermosetting plastic and that costs are largely cut due to reduction in time.

Furthermore, according to the present invention, the gas generated at the time of manufacturing or at the time of thermal curing of the prepolymer composition is limited almost to an ammonia, except a water vapor. Thus, there is not observed generation of a substance having harmful influence on the environment due to dissociation of the thermally dissociative blocking agent, as seen in the case of using the other thermally dissociative blocking agents. Also, there is no generation of a formaldehyde produced by decomposition of a hexamethylenetetramine as a curing catalyst for the prepolymer of the phenolic resin. Moreover, no thermally dissociative blocking agent remains in the thermosetting plastic after the thermally dissociative blocking agent is dissociated.

As described above, in accordance with the present invention, the thermally dissociative blocking agent may be manufactured by use of the ammonium salt such as the ammonium carbonate. Still, it may be manufactured by use of the ammonia, which will reduce the costs. In addition, the ammonia releases its blocking at a low temperature by adding a dissociative catalyst and has no residues such as a metal. Moreover, in the thermally dissociative blocking agent of the present invention, it is only the ammonia that is dissociated by heating, thereby having less reduction in amount or weight. Furthermore, though the thermally dissociative blocking agent of the present invention generates a little unpleasant odor (ammonia odor) at the time of heating, it generates no substance at all that will have harmful influence on the environment as seen in the conventional art. In addition, the thermally dissociative blocking agent of the present invention is capable of being stored as a water-based one if selecting a kind of the isocyanate and its preservation stability is good. Moreover, the thermally dissociative blocking agent of the present invention enables it to be stored in a state of a prepolymer.

### BRIEF DESCRIPTION OF THE DRAWINGS

[Figure 1] Figure 1 is a table showing components of blocked isocyanate compositions according to Working Example 1 to Working Example 4 of the present invention in comparison with components of blocked isocyanate compositions according to Comparative Examples 1 to 4.
[Figure 2] Figure 2 is a table showing components of aqueous prepolymer solutions using the blocked isocyanate compositions according to Working Example 1 to Working Example 4 of the present invention in comparison with components of aqueous prepolymer solutions using the blocked isocyanate compositions according to Comparative Examples 1 to 4.
[Figure 3] Figure 3 is a chart of measurement data of FT-IR of a specimen of Working Example 6 (specimen corresponding to Second Embodiment) in accordance with a blocked isocyanate composition of the present invention.
[Figure 4] Figure 4 is a chart of measurement data of FT-IR with scanning calorimetry of a specimen of Working Example 6 (specimen corresponding to Second Embodiment) in accordance with a blocked isocyanate composition of the present invention.
[Figure 5] Figure 5 is a chart of measurement data of FT-IR of a specimen of Comparison Example 2 (specimen corresponding to First Embodiment) in accordance with a blocked isocyanate composition of the present invention.
[Figure 6] Figure 6 is a chart of measurement data of FT-IR with scanning calorimetry of a specimen of Comparison Example 2 (specimen corresponding to First Embodiment) in accordance with a blocked isocyanate composition of the present invention.
[Figure 7] Figure 7 is a chart of a principal data range of measurement data of H-NMR of a specimen of Working Example 5 (specimen corresponding to Second Embodiment) in accordance with a blocked isocyanate composition of the present invention.
[Figure 8] Figure 8 is a chart of measurement data of C-NMR of a specimen of Working Example 5 (specimen corresponding to Second Embodiment) in accordance with a blocked isocyanate composition of the present invention.
[Figure 9] Figure 9 is a schematic chart of measurement data of H-NMR of Working Example 5 (specimen corresponding to Second Embodiment) in accordance with a blocked isocyanate composition of the present invention.
[Figure 10] Figure 10 is a schematic chart of measurement data of C-NMR of Working Example 5 (specimen corresponding to Second Embodiment) in accordance with a blocked isocyanate composition of the present invention.
[Figure 11] Figure 11 is a chart of measurement data of H-NMR of Comparison Example 1 in accordance with a blocked isocyanate composition of the present invention.
[Figure 12] Figure 12 is a chart of measurement data of C-NMR of Comparison Example 1 in accordance with a blocked isocyanate composition of the present invention.

### DESCRIPTION OF EMBODIMENTS

### [Overview]

Several modes for practicing the present invention (hereinafter referred to as "embodiments") will be described hereinafter. Before describing the embodiments of the present invention, a thermally dissociative blocking agent and a blocked isocyanate composition using the thermally dissociative blocking agent of the present invention are described (as a description of a broader concept including each of the embodiments). First, the present inventors have conducted an extensive study seeking a thermally dissociative blocking agent that thermally dissociates, while generating no harmful influence on the environment. As a result, the inventors obtained a knowledge of a blocking agent, as a thermally dissociative blocking agent for the isocyanate compound, that has a thermally dissociative property at a low temperature equivalent to that of a conventional blocking agent such as a bisulfite or a disulfite and that generates no toxic gas such as a sulfurous acid gas at the time of manufacturing or at the time of thermal dissociation. Thereby, the inventors have conceived the thermally dissociative blocking agent of the present invention, and then, have conceived the invention of the isocyanate composition using the thermally dissociative blocking agent and the prepolymer using the isocyanate composition. That is, the present invention provides, as a first aspect of the invention, a blocked isocyanate composition that is composed of a isocyanate compound and a thermally dissociative blocking agent capable of dissociating at a very low temperature by reacting with the isocyanate compound and that synthesizes a blocked isocyanate compound by the thermally dissociative blocking agent protecting terminal isocyanate groups of the isocyanate compound. The present invention provides, as a second aspect of the invention, a method for manufacturing the blocked isocyanate compound in an aqueous solvent. The present invention provides, as a third aspect of the invention, a thermally dissociative blocking agent applied as a thermally dissociative blocking agent for the blocked isocyanate composition.

### <Thermally Dissociative Blocking Agent>

Here, the blocked isocyanate composition of the present invention is the one that synthesizes the blocked isocyanate compound from the isocyanate compound and the thermally dissociative blocking agent capable of dissociating at a very low temperature, and is characterized in that the thermally dissociative blocking agent is an ammonia or an ammonium salt, while blocking an isocyanate group of the isocyanate compound by a urea-terminal. Moreover, the ammonium salt as the thermally dissociative blocking agent may be at least one kind of thermally dissociative blocking agent selected from a group consisting of a carbonate of an ammonium, a hydrogen carbonate of an ammonium, a percarbonate of an ammonium, a phosphate of an ammonium, a hydrogen phosphate salt of an ammonium, a dihydrogen phosphate salt of an ammonium, an acetate salt of an ammonium, and an oxalate of an ammonium.

In other words, the thermally dissociative blocking agent of the present invention may be sorted (or classified in terms of large category) into: a first kind of thermally dissociative blocking agent (of the large category) composed of an ammonia (in the documents of the present application, for convenience of description, may be referred to as "ammonia-based thermally dissociative blocking agent".); and a second kind of thermally dissociative blocking agent (of the large category) composed of, as an ammonium salt, one kind or two or more kinds of the carbonate of the ammonium, the hydrogen carbonate of the ammonium, the percarbonate of the ammonium, the phosphate of the ammonium, the hydrogen phosphate salt of the ammonium or the dihydrogen phosphate salt of the ammonium , the acetate salt of the ammonium, and the oxalate of the ammonium (in the documents of the present application, for convenience of description, may be referred to as "ammonium-salt-based thermally dissociative blocking agent".) In this case, the thermally dissociative blocking agent of the present invention may be constituted from a thermally dissociative blocking agent that consists of one kind or a thermally dissociative blocking agent that mixes (or is a mixed type of) two or more kinds of the first and the second kinds of the thermally dissociative blocking agents (of the large category).

With respect to specific examples of the thermally dissociative blocking agent, as the above-mentioned ammonium-salt-based thermally dissociative blocking agent, there are exemplified an ammonium carbonate ((NH₄)₂CO), an ammonium hydrogen carbonate (NH₄HCO₃), an ammonium percarbonate ((NH₄)₂CO₄), an ammonium phosphate ((NH₄)₃PO₄), an ammonium hydrogen phosphate ((NH₄)₂HPO₄), an ammonium dihydrogen phosphate (NH₄H₂PO₄), an ammonium acetate (CH₃COONH₄), an ammonium oxalate ((NH₄)₂C₂O₄), or a mixture thereof.

Preferably, the ammonia or the ammonium hydrogen carbonate is used as the thermally dissociative blocking agent, among the above-mentioned, from a viewpoint of a thermal dissociation at a very low temperature, a type of gas generated at the time of thermal dissociation, dissociability at the time of thermal dissociation, or the like.

### <Addition Amount of Thermally Dissociative Blocking Agent>

The addition amount of the thermally dissociative blocking agent of the blocked isocyanate composition of the present invention is preferably 0.1 to 2.0 mol, more preferably 0.5 to 2.0 mol, and still more preferably 1.0 to 1.5 mol, in terms of NCO content, to 1 mol of the isocyanate compound, in any kind of the above-mentioned thermally dissociative blocking agents.

### <Dissociation Temperature of Blocked Isocyanate Compound>

The dissociation temperature of the blocked isocyanate compound (at which the thermally dissociative blocking agent dissociates by heating from the isocyanate group of the isocyanate compound) is almost the same, regardless of whether the thermally dissociative blocking agent is the ammonia-based or the ammonium-salt-based. It is in a temperature range of 60 to 150 degrees centigrade. That is, it was confirmed in the experimental results by the present inventors that there was no significant difference (that is, was substantially equal) in the dissociation temperature of the blocked isocyanate compound, regardless of whether the thermally dissociative blocking agent is the ammonia-based thermally dissociative blocking agent or the ammonium-salt-based thermally dissociative blocking agent, as long as it is judged in terms of a broader concept as the ammonia-based thermally dissociative blocking agent and the ammonium-salt-based thermally dissociative blocking agent. Even if there is a slight difference in the dissociation temperature depending on the type of the thermally dissociative blocking agent, it can be grasped as nearly equal in terms of the characteristics. On the other hand, depending on an individual or specific kind of the ammonia-based thermally dissociative blocking agent and the ammonium-salt-based thermally dissociative blocking agent (i.e. depending on an individual or specific kind of the above-listed thermally dissociative blocking agents such as the ammonia and the ammonium carbonate), as a matter of course, there are cases in which the dissociation temperature is different within the temperature range from the above-mentioned 60 degrees centigrade to 150 degrees centigrade, in accordance with the kinds of the isocyanate compounds to be combined, the blended rate of the thermally dissociative blocking agent to the isocyanate compound, the manufacturing conditions, etc.

### <Curing Temperature of Blocked Isocyanate Prepolymer Composition>

A curing temperature of the blocked isocyanate prepolymer composition of the present invention is nearly equal regardless whether the thermally dissociative blocking agent is the ammonia-based or the ammonium-salt-based (in the same sense as the case that described the above-mentioned blocked isocyanate composition). It is in the temperature range of 80 to 150 degrees centigrade. That is, as described above, regardless whether the thermally dissociative blocking agent contained in the blocked isocyanate composition is the ammonia-based or the ammonium-salt-based, the dissociation temperature of the blocked isocyanate composition is substantially equal. Thus, the curing temperature of the blocked isocyanate prepolymer composition is also substantially equivalent.

### <Curing Time of Blocked Isocyanate Prepolymer Composition>

A curing time of the blocked isocyanate prepolymer composition of the present invention is in a time range of about 20 seconds to about one hour.

### [Confirmation by Experimental Results]

The inventors of the present invention conducted intensive experiments in the course of completing the blocked isocyanate composition and the blocked isocyanate prepolymer composition of the present invention. From results of the experiments, it is confirmed that the ammonia or the ammonium salt as described above acts as the thermally dissociative blocking agent of the present invention so as to surely perform predetermined functions and effects (blocking and/or protecting effect of the terminal and/or free NCO groups of the blocked isocyanate compound and dissociative effect of the blocking agent at a predetermined low temperature range in the heating). The experimental results are described hereafter.

### <Blocking of NCO Group in Blocked Isocyanate Composition>

First, the present inventors maintained an aqueous solvent, which contained an aqueous ammonia and a dioxane as a polar organic solvent, at a constant temperature in a predetermined container. It was stirred for a long time, while an isophorone diisocyanate (IPDI) was dripped therein. Then, a blocked isocyanate was obtained by the IPDI reacted with the ammonia. The solution as a sample solution was analyzed by a scanning calorimetry FT-IR (FT-IR6000 manufactured by JASCO Corporation). Then, an infrared absorption spectrum in the vicinity of 2240 cm⁻¹ due to the NCO group (isocyanate group) of the IPDI had disappeared. Moreover, it was confirmed that significant infrared absorption spectra caused by -NH-CO- had appeared in the vicinity of 1535 cm⁻¹, while disappearing continuously at a temperature not less than 100 degrees centigrade of the sample solution. Furthermore, in an analysis by NMR (nuclear magnetic resonance), a peak of a primary amine, which was taken as being produced by the reaction of the isocyanate with the ammonia, was confirmed in the vicinity of 6 ppm in this sample solution. In addition, a peak of a secondary amine, which was taken as being produced by the reaction of the isocyanate with the ammonia, was confirmed in the vicinity of 8 ppm in the sample solution. Furthermore, in an analysis by TG-MS (thermogravimetric measurement/mass spectrometry), a mass peak of the ammonia (NH₃ (m / Z = 17)) was detected at a temperature not less than 60 degrees centigrade of the sample solution, so that generation of an ammonia gas was confirmed. Examining the results of the analysis by TG-MS with the results of the analysis by the scanning calorimetry FT-IR, it is evaluated that -NH-CO- decreases in the sample solution in association with the generation of the ammonia gas.

From these facts, the followings were confirmed. First, it was confirmed that the sample solution was a solution with which the ammonia was involved, since it shows the infrared absorption spectrum as described above. Moreover, it was confirmed that this sample solution was not a solution in which the ammonia was simply mixed (i.e. not simply mixed, but added to the NCO group of the isocyanate compound as a protective group), since a noticeable infrared absorption spectrum appeared in the vicinity of 1535 cm⁻¹ that was caused by -NH-CO-, while the infrared absorption spectrum in the vicinity of 1535 cm⁻¹ disappeared continuously at the temperature of 100 degrees centigrade of the sample solution. Furthermore, it was confirmed that, the sample solution was a solution of a blocked polyisocyanate compound in which the NCO group of the IPDI was blocked by the urea terminal derived from the ammonia, since this sample solution did not show the absorption spectrum that was unique in the NCO group, while it showed the peak of the primary amine was seen in the vicinity of 6 ppm in NMR that was thought to be produced by the reaction of the isocyanate and the ammonia and since the peak of the secondary amine was seen in the vicinity of 8 ppm in NMR that was thought to be produced by the reaction of the isocyanate and the ammonia. This means that, when the isocyanate compound such as the IPDI or the MDI is present in an aqueous solvent that is maintained at a constant temperature, it is the ammonia rather than the water that reacts faster with the isocyanate group of the isocyanate compound, thereby protecting the isocyanate group (i.e. the ammonia functioning as a blocking agent of the isocyanate group).

In addition, with respect to the infrared absorption spectra attributed to the isocyanate group in the vicinity of 2210 cm⁻¹ of the solution, a continuous increase of the peak was seen at a temperature not less than 130 degrees centigrade of the solution. From this fact, it was confirmed that the isocyanate group was reproduced by heating the sample solution at the temperature not less than 130 degrees centigrade. That is, it was confirmed that the protection of the isocyanate group by the urea terminal derived from the ammonia was released at the temperature not less than 130 degrees centigrade of the sample solution, so that the sample solution was capable of exhibiting a function as a curing agent.

### <Gel Fraction/Swelling Ratio>

Next, the inventors maintained an aqueous solvent that contained an aqueous ammonia (e.g. a mixed aqueous solution of the aqueous ammonia with a polar organic solvent), at a constant temperature in a predetermined container, in the same manner as the above-stated confirmation test by the IPDI. It was stirred for a long time, while a diphenylmethane diisocyanate (MDI) was dripped therein. Then, a blocked isocyanate consisting of MDI was finally deposited in a form of powder, thereby providing a sample in the form of powder. Then, a gel fraction and a swelling ratio was measured on the powdery sample. That is, the powdery sample was combined with the polyvinyl alcohol (PVA) at a fixed proportion. Then, they were treated at a temperature of 150 degrees centigrade for 30 minutes (150 °C × 35 min), thereby obtaining a hardened body that was cured by the above-mentioned sample. Thereafter, the hardened body was immersed in the water at a temperature of 70 degrees centigrade for 48 hours (48H). Then, the hardened body was evaluated by a rate of change between a weight and an area before the immersion and those after the immersion (after taking out). As a result, the gel fraction was not less than 90% and the swelling ratio was not more than 120% at the fixed proportion.

In the confirmation test of the gel fraction and the swelling ratio and in working examples described later, MDI is used as a diisocyanate in composing elements of the blocked isocyanate. On the other hand, in the above-stated confirmation test on the blocking of the NCO group, IPDI that is an aliphatic diisocyanate is used as a diisocyanate. This is because it is impossible to determine the infrared absorption spectra of the primary amine and the secondary amine by use of an aromatic diisocyanate such as MDI that is frequently used as the diisocyanate, since their spectra are overlapped with the infrared absorption spectra of a functional group of the aromatic series. From the confirmation test results on the blocking of NCO group using the IPDI and the other experimental results, it is confirmed that there is obtained a blocked isocyanate in which the NCO group was blocked by the urea terminal derived from the ammonia (or the ammonium salt) even in the case of the blocked isocyanate using the aromatic diisocyanate such as the above-mentioned MDI, as in the case of the blocked isocyanate using the aliphatic diisocyanate such as the IPDI.

### <Thermal Dissociation of Blocked Isocyanate Prepolymer Composition>

Then, the present inventors prepared a viscous sample solution with a glucose dissolved therein and measured a viscosity thereof by use of a rheometer (digital cone viscometer CV-1S made by M.S.T. Engineering Co., Ltd.). As a result, curing progressed rapidly in a temperature range of 120 to 130 degrees centigrade, and it reached an unmeasurable cure degree (intrinsic viscosity). During this thermal curing process, there was no generation of a toxic gas or a substance that imparts harmful influence on the environment. Thus, it was shown that the blocking agent of the ammonia had a low temperature dissociative property comparable to the sodium hydrogen sulfite and that the use of the glucose enabled a thermal curing rate surpassing a prepolymer of the phenolic resin.

The inventors conducted experiments, other than the ammonium, using the carbonate of the ammonium, the hydrogen carbonate of the ammonium, the percarbonate of the ammonium, the phosphate of the ammonium, the hydrogen phosphate salt of the ammonium, the dihydrogen phosphate salt of the ammonium, the acetate salt of the ammonium, and the oxalate of the ammonium. Consequently, a thermal dissociation phenomenon was confirmed on them at the same temperature as the ammonia, too. Moreover, it was confirmed that the curing temperature varied in the temperature range of 80 to 150 degrees centigrade in the prepolymer composition of the present invention, depending on the kind of the isocyanate-reactive compound to be mixed with the blocked isocyanate composition.

### <Terminal Structure of Blocked Isocyanate>

From a variety of experimental results including the above-mentioned experimental results, it was confirmed that the blocked isocyanate in accordance with the present invention had a terminal structure of a urea terminal and that the urea terminal protected the isocyanate group (NCO group) as a protective group, as shown in the following chemical formula (1) .

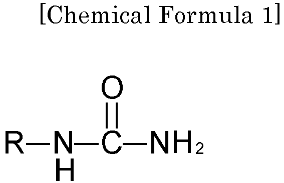

Moreover, from a variety of experimental results including the above-mentioned experimental results, it was confirmed that, if heating the blocked isocyanate composition, the ammonia (NH₃) was dissociated from the urea terminal group, thereby releasing the protection of the isocyanate group (NCO group), as shown in the following chemical formula (2).

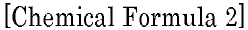

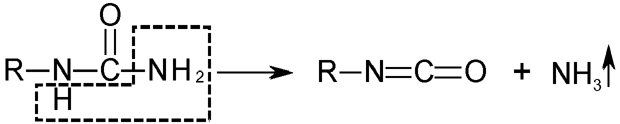

### [Summary of Blocked Isocyanate Composition of Invention (Characteristics of Terminal Structure)]

As described above, a blocked isocyanate composition according to a first aspect of the present invention is a blocked isocyanate composition synthesized from an isocyanate compound and a thermally dissociative blocking agent, characterized in that the thermally dissociative blocking agent is at least one kind of thermally dissociative blocking agent selected form a group consisting of an ammonia and an ammonium salt and in that the thermally dissociative blocking agent blocks the isocyanate group of the isocyanate compound by the urea terminal.

Moreover, a blocked isocyanate composition according to a second aspect of the present invention is a blocked isocyanate composition obtained by synthesizing an isocyanate compound and a thermally dissociative blocking agent in a predetermined solvent, characterized in that the thermally dissociative blocking agent is an ammonia-based thermally dissociative blocking agent that dissociates a NH₃ group in the solvent and in that the ammonia-based thermally dissociative blocking agent blocks the isocyanate group of the isocyanate compound by the terminal structure shown by a general formula "-R-NH-CO-NH₂" (or the above-mentioned chemical formula (1)).

That is, a blocked isocyanate composition according to the present invention is characterized in that it uses a thermally dissociative blocking agent consisting of an ammonia or a predetermined ammonium salt (described later) or a combination thereof as a thermally dissociative blocking agent and in that it blocks the isocyanate group (NCO group) of the isocyanate compound by an urea terminal structure (a structure becoming or consisting of "-NH-CO-NH₂") that is derived from the thermally dissociative blocking agent. Particularly, the invention is characterized by an urea terminal structure by an ammonia group (NH₃) that the thermally dissociative blocking agent dissociates in the solvent. Alternatively, it may be said that a blocked isocyanate composition according to the present invention is characterized by a terminal structure in which the isocyanate group (NCO group) of the isocyanate compound is blocked by a primary amine ("-NH₂") derived from an ammonia or a predetermined ammonium salt as the thermally dissociative blocking agent (that may be referred to as "terminal primary amine structure" hereafter). The ammonia or the predetermined ammonium salt as the thermally dissociative blocking agent dissociates the ammonia group (NH₃) in the solvent to block the NCO group of the isocyanate compound by the ammonia group (NH₃). Thus, in the explanation of the present invention, it may be referred to as "NH₃-based thermally dissociative blocking agent" for the purpose of description.

Thereby, in the present invention, in case of using the ammonia (NH₃) and in case of using the predetermined ammonium salt such as the ammonium hydrogen carbonate, if the isocyanate compound and the NH₃-based thermally dissociative blocking agent are mixed and stirred in a predetermined solvent (e.g. an aqueous solvent described later), the ammonia group (NH₃) is dissociated from the NH₃-based thermally dissociative blocking agent such that the ammonia group (NH₃) blocks the NCO group of the isocyanate compound. In detail, the primary amine group (NH₂) is dissociated from the ammonia group (NH₃) so as to form a terminal group of the NCO group. Consequently, the NH₃-based thermally dissociative blocking agent blocks the NCO group of the isocyanate compound in the solvent, regardless of whether it uses the ammonia (NH₃) or it uses the predetermined ammonium salt such as the ammonium hydrogen carbonate, thereby forming a terminal structure as shown in the following chemical formula (3).

The predetermined ammonium salt used as the NH₃-based thermally dissociative blocking agent is a salt represented by a general formula "NH₄X" ("X" being a monovalent acid in the formula). As described later, it is preferable to use an ammonium salt other than an ammonium salt of strong acid. Moreover, it is preferable to use an ammonium salt other than an ammonium salt of a predetermined inorganic oxoacid (such as an ammonium nitrate). For example, as an ammonium salt of an oxoacid, it is preferable to use an ammonium acetate (CH₃COONH₄)or an ammonium oxalate ((NH₄)₂C₂O₄) as an ammonium salt of an organic acid as described later. For example, if the ammonium salt of strong acid is used as the thermally dissociative blocking agent for the blocked isocyanate composition according to the present invention, it is possible to give a harmful influence to a curing reaction when the block of the thermally dissociative blocking agent is thermally dissociated from the isocyanate compound to react the isocyanate compound with an isocyanate-reactive compound. Moreover, in case the ammonium salt of organic acid is used as the thermally dissociative blocking agent for the blocked isocyanate composition according to the present invention (specifically in case of using the ammonium acetate (CH₃COONH₄) or the ammonium oxalate ((NH₄)₂C₂O₄) as a preferable example thereof), the dissociability becomes very excellent when thermally dissociating the block of the thermally dissociative blocking agent in comparison with the ammonium salt of a predetermined inorganic oxoacid (such as the ammonium nitrate).

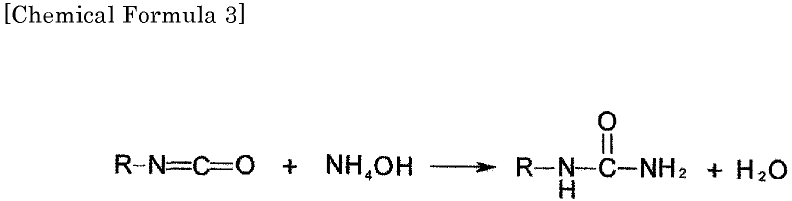

On the other hand, in the blocked isocyanate composition according to the present invention, in case of using the ammonia (NH₃) and in case of using the predetermined ammonium salt such as the ammonium hydrogen carbonate, if the blocked isocyanate composition is heated at a temperature not less than a thermal dissociation temperature of the NH₃-based thermally dissociative blocking agent, the primary amine of the aforementioned terminal primary amine structure is dissociated, as shown in the following chemical formula (4), thereby reproducing the isocyanate group and the ammonia (NH₃). Thus, as shown in the following chemical formula (4), the isocyanate compound reacts with the isocyanate-reactive compound to be hardened. In other words, the present invention is an invention focusing on a thermally dissociative blocking agent in which a terminal structure of the blocked isocyanate composition becomes the urea terminal structure (terminal primary amine structure). Therefore, the present invention uses the aforementioned NH₃-based thermally dissociative blocking agent, as a thermally dissociative blocking agent that is capable of dissociating the NH₃ group and binding it with the isocyanate group in the solvent when preparing the blocked isocyanate composition by synthesizing the isocyanate compound with the thermally dissociative blocking agent. Therefore, the NH₃-based thermally dissociative blocking agent may be said as a thermally dissociative blocking agent that is capable of generating the urea terminal structure or the terminal primary amine structure via the NH₃ group.

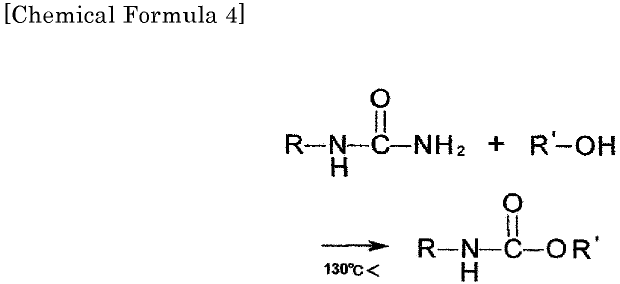

### [Description of Embodiments]

Next, the embodiment of the present invention will be explained. In the following descriptions of the embodiments on the blocked isocyanate compositions and the thermally dissociative blocking agents in the prepolymer compositions of the present invention, the thermally dissociative blocking agents are classified into two types as described above, that is, the ammonia-based thermally dissociative blocking agent and the ammonium-salt-based thermally dissociative blocking agent. Then, the inventions of the blocked isocyanate compositions and the prepolymer compositions containing those thermally dissociative blocking agents will be described as an Embodiment 1 and an Embodiment 2, respectively.

### [Embodiment 1: Ammonia-based thermally dissociative blocking agent]

### <Blocked Isocyanate Composition>

A blocked isocyanate composition according to the Embodiment 1 is composed of an isocyanate compound and an ammonia-based thermally dissociative blocking agent that reacts with the isocyanate compound to be dissociated at a very low temperature. A blocked isocyanate compound is synthesized by protecting terminal isocyanate groups of the isocyanate compound with the ammonia-based thermally dissociative blocking agent.

### <Isocyanate Compound>

In the present embodiment, as the isocyanate compound, there may be used: one kind of a diphenylmethane diisocyanate (MDI), a polymethylene polyphenyl isocyanate (polymeric MDI), a tolylene diisocyanate (TDI), a hexamethylene diisocyanate (HDC), an isophorone diisocyanate (IPDI), a naphthalene diisocyanate (NDI), a mixture of these isocyanates with one another; a modified isocyanate made by modifying these isocyanates with an urethane modification, an allophanate modification, a carbodiimide (CD) modification, an isocyanurate modification, or the like, and a mixture thereof. As the isocyanate compound, it is preferable to use the MDI in view of availability or the like. Still, as a matter of course, another isocyanate such as the IPDI may be used as necessary.

### <Thermally Dissociative Blocking Agent>

In the present embodiment, the ammonia-based thermally dissociative blocking agent is used as the thermally dissociative blocking agent. Specifically, the thermally dissociative blocking agent is an aqueous ammonia. More in detail, as the present embodiment of the thermally dissociative blocking agent, an aqueous ammonia (NH₃(aq)) at a concentration of 25 to 28 % may be preferably used.

### <General Formula of Blocked Isocyanate Composition (Compound)>

A general formula of the blocked isocyanate composition of the present embodiment (and the blocked isocyanate compound synthesized with the blocked isocyanate composition) is a molecular formula shown in a general formula (1), in case of using the aqueous ammonia as the thermally dissociative blocking agent. In the formula, -R-NH-CO- indicates an isocyanate compound. In addition, the general formula (1) shows the case where the thermally dissociative blocking agent of the present invention reacts with and protects the terminal (free) isocyanate group (NCO group) of each isocyanate monomer. That is, the general formula (1) shows a case where the terminal structure becomes the urea terminal by the ammonia (NH₃) and the urea terminal group constitutes the protective group of the isocyanate group (NCO). Moreover, in the formula, R shows a residue except the isocyanate group of the isocyanate that is formed from one kind or two or more kinds selected from the aliphatic isocyanate, an alicyclic isocyanate, and the aromatic isocyanate.

### (Ammonia: NH₃)

-R-NH-CO-NH₂ General formula (1)

Thus, as shown in the general formula (1), if the thermally dissociative blocking agent is the aqueous ammonia, the terminal structure becomes the urea terminal by the ammonia (NH₃), so that the urea terminal group constitutes the protective group of the isocyanate group (NCO), thereby protects (blocks) the isocyanate group (NCO group) at the terminal of the isocyanate compound.

### <Addition Amount of Thermally Dissociative Blocking Agent>

The addition amount of the thermally dissociative blocking agent in the blocked isocyanate composition (and compound) of the present embodiment is 0.1 to 2.0 mol, preferably 0.5 to 2.0 mol, most preferably 1.0 to 1.5 mol to 1 mol of the isocyanate in terms of NCO group content.

### <Dissociation Temperature of Blocked Isocyanate>

The blocked isocyanate compound of the present embodiment uses the ammonia-based thermally dissociative blocking agent as the thermally dissociative blocking agent. Thus, as described above, the thermal dissociation temperature is in the temperature range of 60 to 150 degrees centigrade (i.e. the lower limit is about 60 degrees centigrade and the upper limit is about 150 degrees centigrade).

### <Method of Manufacturing Blocked Isocyanate Composition>

In a method for manufacturing the blocked isocyanate composition of the present embodiment, first, in a thermally dissociative blocking agent preparation step, a predetermined amount of the aqueous ammonia is dissolved as the ammonia-based thermally dissociative blocking agent in an aqueous solvent containing (added with) a predetermined amount of a polar organic solvent (such as a dioxane) so as to have a predetermined concentration in a predetermined container, thereby preparing a thermally dissociative blocking agent solution. Then, the thermally dissociative blocking agent solution is maintained at a constant temperature by a predetermined cooling device, while being stirred by a predetermined stirrer at a constant stirring rate. Next, in a blocked isocyanate composition preparation step, the thermally dissociative blocking agent solution is stirred by a predetermined stirrer, while a predetermined amount of an isocyanate compound such as the isophorone diisocyanate (IPDL) or the diphenylmethane diisocyanate (MDI) is dripped into the thermally dissociative blocking agent solution that is maintained at the constant temperature in the container, for a predetermined long time (e.g. in a time range of 30 minutes to 90 minutes, preferably, about 1 hour). Moreover, if necessary, there is added a chain extender such as a diethylene glycol (DEG) or a polyethylene glycol of low molecular weight (e.g. PEG of molecular weight of 50 to 500, preferably PEG of molecular weight not more than 400 that is PEG200 or the like), and/or a catalyst by a predetermined amount, thereby obtaining a blocked isocyanate solution. Moreover, this blocked isocyanate solution is dried for a predetermined time at a predetermined drying temperature by a given drying apparatus and/or a predetermined drying method (such as a vacuum drying). Thus, there is provided a solid blocked isocyanate composition that is in a gel state (in case the isocyanate compound is IPDI or the like) or in a powder state (in case the isocyanate compound is MDI or the like). The blocked isocyanate composition of the present embodiment may be embodied into the solid state blocked isocyanate composition, but may also be embodied as the aforementioned blocked isocyanate solution (as in the case in which the isocyanate compound is IPDI).

### <Polar Organic Solvent>

As the polar organic solvent, there are listed: a ketone solvent such as a methyl ethyl ketone (MEK), an acetone, a diethyl ketone, a methyl isobutyl ketone (MIBK), a methyl isopropyl ketone (MIPK), or a cyclohexanone; an alcohol solvent such as a methanol, an ethanol, an isopropanol, an ethylene glycol, a diethylene glycol (DEG), a glycerin; an ether solvent such as a diethyl ether, a diisopropyl ether, a 1,2-dimethoxyethane (DME), a dioxane, a tetrahydrofuran (THF), a tetrahydropyran (THP), an anisole, a diethylene glycol dimethyl ether (diglyme), or a diethylene glycol ethyl ether (carbitol); an aliphatic hydrocarbon solvent such as a hexane, a pentane, a heptane, or a cyclohexane; an aromatic hydrocarbon solvent such as a toluene, a xylene, or a benzene; an aromatic heterocyclic compound-based solvent such as a pyridine, a pyrazine, a furan, a pyrrole, a thiophene, or a methyl pyrrolidone; an amide solvent such as a N,N-dimethylformamide (DMF), or a N,N-dimethylacetamide (DMA); a halogen compound-based solvent such as a chlorobenzene, a dichloromethane, a chloroform, or a 1,2-dichloroethane; an ester solvent such as an ethyl acetate, a methyl acetate, or an ethyl formate; a sulfur compound-based solvent such as a dimethyl sulfoxide (DMSO), or a sulfolane; a nitrile solvent such as an acetonitrile, a propionitrile, or an acrylonitrile; various organic solvents like an organic acid-based solvent such as a formic acid, an acetic acid, a trichloroacetic acid, or a trifluoroacetic acid; or a mixed solvent containing them, and the like. Preferably, the polar organic solvent is the acetone or the dioxane. However, the usable polar organic solvent is not limited thereto.

### <Addition Amount of Polar Organic Solvent>

In the aqueous solvent used in the manufacturing method of the blocked isocyanate composition, the addition amount of the polar organic solvent is 1 to 500 parts, preferably 5 to 100 parts, more preferably 10 to 50 parts, most preferably 20 to 40 parts, to 100 parts of the water.

### <Temperature of Aqueous Solvent>

In the manufacturing method of the blocked isocyanate composition, the temperature of the aqueous solvent (i.e. the temperature of the thermally dissociative blocking agent solution that is maintained at the constant temperature in the container) is in a temperature range of 0 to 60 degrees centigrade (i.e. it is necessary for the upper limit thereof to be 60 degrees centigrade at most, which is the lower limit of the dissociation temperature of the thermally dissociative blocking agent), preferably in a temperature range of 5 to 40 degrees centigrade, and most preferably in a temperature range of 5 to 20 degrees centigrade.

### <Additive>

After preparing the blocked isocyanate prepolymer composition by using the present embodiment of the blocked isocyanate composition as a material, when the blocked isocyanate prepolymer composition is heated to be thermally cured, it is preferable to add a catalyst composed of an organic acid salt of a metal to the blocked isocyanate composition in order to surely dissociate the thermally dissociative blocking agent. As the catalyst composed of the organic acid salt of the metal, though a zinc acetate (dihydrate), a sodium carbonate aqueous acid, a tertiary amine or the like may be used, the zinc acetate may be preferably used. On the other hand, in case of using the polyvinyl alcohol (PVA) as the material (isocyanate-reactive compound) of the blocked isocyanate prepolymer composition, it is unnecessary to add such a catalyst. That is, in this case, the thermally dissociative blocking agent reacts with a vinyl acetate group of the polyvinyl alcohol and is easily dissociated at the time of heating the blocked isocyanate prepolymer composition. Thus, it is unnecessary to add the above-mentioned catalyst. Moreover, in case of using a material having an acetate ester group or a vinyl acetate group as the material (isocyanate-reactive compound) of the blocked isocyanate prepolymer composition, it is unnecessary to add such a catalyst. That is, in this case, the thermally dissociative blocking agent reacts with the vinyl acetate group or the acetate ester group and is easily dissociated at the time of heating the blocked isocyanate prepolymer composition, too. Thus, it is unnecessary to add the above-mentioned catalyst.

### <Chain Extension>

In the blocked isocyanate composition, the isocyanate compound constituting the blocked isocyanate composition may be one obtained by extending molecular chains with each other by a predetermined chain extender (chain-extended isocyanate compound). Alternatively, it may be one obtained by not extending molecular chains with each other by a predetermined chain extender (non-chain-extended isocyanate compound). That is, in the blocked isocyanate composition, the isocyanate compound may be a chain-extended isocyanate compound in which the isocyanate group is blocked by the urea terminal (derived from the ammonia), while the molecular chains being chain-extended with each other by the chain extender. Alternatively, the isocyanate compound may be a non-chain-extended isocyanate compound in which the isocyanate group is blocked by the urea terminal (derived from the ammonia), while the molecular chains being not chain-extended by the chain extender.

In detail, for example, in case of using IPDI as the diisocyanate, it is possible to obtain a chain-extended isocyanate compound by PEG by chain-extending the molecular chains of IPDI with each other by PEG as the chain extender. In this case, the blocked isocyanate compound constituting the blocked isocyanate composition has a structure in which the urea terminal blocks the isocyanate group at the terminal of the chain-extended isocyanate compound (the blocked isocyanate compound having this structure may be referred to as "chain-extended blocked isocyanate compound" hereafter).

A range of a molecular weight (MW) of the chain-extended portion (i.e. PEG) in the chain-extended blocked isocyanate compound may be a range of a molecular weight of 50 to 1000,000. Preferably, as a range frequently used, it may be a range of a molecular weight of 100 to 10,000.

On the other hand, for example, in case of using IPDI as the diisocyanate, it is possible to obtain a no n-chain-extended isocyanate compound by not chain-extending the molecular chains of IPDI with each other by PEG as the chain extender. In this case, the blocked isocyanate compound constituting the blocked isocyanate composition has a structure in which the urea terminal blocks the isocyanate group at the terminal of the non-chain-extended isocyanate compound (the blocked isocyanate compound having this structure may be referred to as "non-chain-extended blocked isocyanate compound" hereafter).

In the above-mentioned, the blocked isocyanate composition constituted by the non-chain-extended blocked isocyanate compound forms a prepolymer together with a polyol such as PVA. However, the blocked isocyanate composition constituted by the chain-extended blocked isocyanate compound is polymerized by itself by adding a predetermined catalyst. Thus, a polyol is unnecessary therefor. That is, the blocked isocyanate composition composed of the chain-extended blocked isocyanate compound functions in itself as a so-called blocked isocyanate prepolymer.

### <Chain Extender>

As the chain extender, a macropolyol, or a low molecular weight polyol may be used. As the macropolyol, a polyether type, a polyester type, or other polyols may be used. As the polyether type, for example, a polyethylene glycol (PEG), a polypropylene glycol (PPG), an EO / PO copolymer, a polytetramethylene ether glycol (PTMEG) may be used. As the polyester type, for example, there may be used a polyester type chain extender such as a polyester polyol from a polyol / polybasic acid, a polyol EG, a DEG, a 1.4-BG, a 1.6-HG, an NPG, an MPD and the like, or a polyester type chain extender such as a polybasic acid AA (adipic acid), AZA (azelaic acid), SA (sebacic acid), IPA (isophthalic acid), a TPA (terephthalic acid), a polycaprolactonediol (PCL), a polycarbonate diol. As the other polyols, a castor oil, an acrylic polyol, a polyurethane diol, an epoxy resin and the like may be used. As the low molecular weight polyol, a short chain polyol and the like may be used. As the short chain polyol and the like, an ethylene glycol (EG), a diethylene glycol (DEG), a 1.4-butanediol (1.4-BG), a 1.6-hexanediol (1.6-HG), a neopentyl glycol NPG), a 3-methylpentanediol (MPD), a hydroxyethyl acrylate (HEA), a trimethylolpropane (TMP), a dimethylol propionic acid (DMPA), an isophorone diamine (IPDA) and the like may be used. As the chain extender, a diamine-based chain extender may also be used.

### <Blocked Isocyanate Prepolymer Composition>

The blocked isocyanate prepolymer composition of the present embodiment is a mixture of a blocked isocyanate compound synthesized from the blocked isocyanate composition and an isocyanate-reactive compound, and is characterized by being thermally cured by heating at a predetermined temperature.

### <Isocyanate-Reactive Compound>

The isocyanate reactive compound is constituted by a polyol or a polyamine. Specifically, it is a monosaccharide, a disaccharide, a small-number-saccharide, an oligosaccharide, a polysaccharide, a water-based polysaccharide, a polyhydric alcohol, an aromatic polyol, a primary amine compound, a secondary amine compound, a carboxylic acid compound, a water, or a mixture thereof. As the monosaccharide, there are a glucose, a fructose, a galactose, a mannose, a ribose, and the like. As the disaccharide, there are a maltose, a sucrose, a trehalose, a lactose, a cellobiose, an ylmaltose, a gentiobiose and the like. As the small-number saccharide, there are: a gentianose, a raffinose, a panose, and a melezitose (as trisaccharide); a stachyose (as tetrasaccharide) ; and the like. As the oligosaccharide, there are a fructo-oligosaccharide, n isomalto-oligosaccharide, a soybean oligosaccharide, and the like. As the polysaccharide, there are a starch, a cellulose, and the like. As the starch, there are a tapioca, a potato, a corn (maize), a wheat, a sweet potato, a rice, a sago, and the like. As the water-based polysaccharide, there are a dextrin, an alpha starch, and the like. Preferably, the isocyanate-reactive compound of the present embodiment consists of the polyvinyl alcohol as the polyol. In case of using the polyamine ad the isocyanate-reactive compound, amino-type bond is possible, since the ammonia as the thermally dissociative blocking agent of the present embodiment is stable toward amine.

### <Manufacturing Method of Blocked Isocyanate Prepolymer Composition>

For the blocked isocyanate prepolymer composition of the present embodiment, first, in a raw material mixing step, a predetermined amount of the blocked isocyanate compound and a predetermined amount of the isocyanate-reactive compound are mixed in a predetermined container (so as to have a predetermined mixing ratio) to obtain a mixed raw material. Next, the mixed raw material is pulverized by a predetermined grinding device so as to have a predetermined particle size distribution (and a maximum particle size not more than a predetermined value), thereby obtaining the blocked isocyanate prepolymer composition of the present embodiment. Here, thus manufactured blocked isocyanate prepolymer composition of the present embodiment may be embodied as one of a resin type, an aqueous emulsion type, and an aqueous dispersion type.

### <Resin Type of Blocked Isocyanate Prepolymer Composition>

The resin type of blocked isocyanate prepolymer composition is made by dry-grinding a dried product of a mixture of the blocked isocyanate compound (typically, using MDI as the diisocyanate) and the isocyanate-reactive compound in a predetermined dry milling apparatus so that the maximum particle size becomes 20 micrometers or less. As the dry milling apparatus, there may be used a hammer mill, a roller mill, a ball mill, a turbo-mill, and the like. The blocked isocyanate prepolymer composition of resin type is preferably prepared into a particle size range of 10 to 20 micrometers.

### <Aqueous Emulsion Type of Blocked Isocyanate Prepolymer Composition>

The aqueous slurry type of blocked isocyanate prepolymer composition is made by wet-grinding a dried product of a mixture of the blocked isocyanate compound (typically, using IPDI as the diisocyanate) and the isocyanate-reactive compound in a predetermined wet milling apparatus so that the maximum particle size becomes 20 micrometers or less. As the wet milling apparatus, there may be used a homogenizer, a ball mill, and the like. The blocked isocyanate prepolymer composition of the aqueous emulsion type may be added with a dispersing agent, a surface active agent, or the like, if desired. The blocked isocyanate prepolymer composition of aqueous emulsion type is preferably prepared into a particle size range of 1 to 10 micrometers.

### <Aqueous dispersion type of blocked isocyanate prepolymer composition>

The aqueous dispersion type of blocked isocyanate prepolymer composition is made by grinding a dried product of a mixture of the blocked isocyanate compound (typically, using MDI as the diisocyanate) and the isocyanate-reactive compound in a predetermined milling apparatus so that the maximum particle size becomes 10 micrometers or less, thereafter being dispersed in the water. As the milling apparatus, there may be used a bead mill, a homogenizer, a ball mill, and the like. The aqueous dispersion type of blocked isocyanate prepolymer composition may be added with a dispersing agent, a surface active agent, or the like, if desired. The blocked isocyanate prepolymer composition of aqueous dispersion type is preferably prepared into a particle size range not more than 1 micrometer.

### <Curing Temperature of Blocked Isocyanate Prepolymer Composition>

A curing temperature of the blocked isocyanate prepolymer composition of the present embodiment is commensurate with the dissociation temperature (depending on the thermally dissociative blocking agent to be used) of the blocked isocyanate compound contained therein (i.e. commensurate with the dissociation temperature of the ammonia-based thermally dissociative blocking agent that is used as the thermally dissociative blocking agent in the present embodiment). It is in a temperature range of 60 to 150 degrees centigrade.

### <Curing Time of Blocked Isocyanate Prepolymer Composition>

In the blocked isocyanate prepolymer composition of the present embodiment, the thermally dissociative blocking agent in the blocked isocyanate compound contained therein is the ammonia-based thermally dissociative blocking agent. A curing time thereof is in a time range of about 20 to about 180 seconds (in case of using MDI as the isocyanate) and in a time range of about 20 to about 1 hour (in case of using IPDI as the isocyanate).

### [Embodiment 2: Ammonium-Salt-Based Thermally Dissociative Blocking Agent]

### <Blocked Isocyanate Composition>

The blocked isocyanate composition according to the second embodiment is composed of an isocyanate compound and an ammonium-salt-based thermally dissociative blocking agent that reacts with the isocyanate compound to be dissociated at a very low temperature. The blocked isocyanate composition synthesizes the blocked isocyanate compound by protecting the terminal isocyanate group of the isocyanate compound with the ammonium-salt-based thermally dissociative blocking agent.

### <Isocyanate Compound>

In the present embodiment, as the isocyanate compound, the same ones as the first embodiment may be used.

### <Thermally Dissociative Blocking Agent>

In this embodiment, as the thermally dissociative blocking agent, the ammonium-salt-based thermally dissociative blocking agent is used. In the present embodiment, as the ammonium salt that is the thermally dissociative blocking agent, an organic acid salt is preferably used in view of dissociability of the thermally dissociative blocking gent at the time of heating. (It is possible that the dissociability become insufficient at the time of heating the thermally dissociative blocking agent in case of a salt of oxo-acid) Specifically, any one kind or a mixture of two or more kinds of: an ammonium carbonate ((NH₄)₂CO), an ammonium hydrogen carbonate (NH₄HCO₃), an ammonium percarbonate ((NH₄)₂CO₄), an ammonium phosphate ((NH₄)₃PO₄), an ammonium hydrogen phosphate ((NH₄)₂HPO₄), an ammonium dihydrogen phosphate (NH₄H₂PO₄), an ammonium acetate (CH₃COONH₄), and an ammonium oxalate ((NH₄)₂C₂O₄).

### <General Formula of Blocked Isocyanate Composition (Compound)>

A general formula of the blocked isocyanate composition (and the blocked isocyanate compound synthesized from the blocked isocyanate composition) of the embodiment 2 is the same molecular formulae as the aforementioned general formula (1) in case of using the aforementioned predetermined ammonium salt as the thermally dissociative blocking agent. That is, in this case, in a completely same manner as the case in which the aforementioned ammonia (NH₃) is used as the thermally dissociative blocking agent, the thermally dissociative blocking agent of the embodiment 2 reacts with and protects the (free) isocyanate group (NCO group) at the terminal of each isocyanate monomer. Specifically, in this case, the terminal structure thereof becomes the urea terminal structure by the ammonia group (NH₃) (i.e. becoming the aforementioned primary amine terminal structure), so that the urea terminal group (i.e. the aforementioned primary amine terminal group) constitutes the protective group of the isocyanate group (NCO).

### <Addition Amount of Thermally Dissociative Blocking Agent>

The addition amount of the thermally dissociative blocking agent in the blocked isocyanate composition of the present embodiment (and compound) is the same as the blocked isocyanate composition of the first embodiment.

### <Dissociation Temperature of Blocked Isocyanate>

The blocked isocyanate compound of the present embodiment uses the ammonium-salt-based thermally dissociative blocking agent as the thermally dissociative blocked agent. The thermal dissociation temperature thereof is in the temperature range of 60 to 150 degrees centigrade as described above.

### <Manufacturing Method of Blocked Isocyanate Composition>

The method for manufacturing the blocked isocyanate composition of the present embodiment is the same as the manufacturing method of the blocked isocyanate composition of the first embodiment. The conditions such as the kind of the polar organic solvent to be used, the addition amount of the polar organic solvent, the additive, the chain extension, the temperature of the aqueous solvent, and the like are the same as the conditions of the blocked isocyanate composition of the first embodiment.

### <Blocked Isocyanate Prepolymer Composition>

The blocked isocyanate prepolymer composition of the present embodiment is a mixture of the blocked isocyanate compound, which is synthesized from the blocked isocyanate composition, and the isocyanate-reactive compound, as in the case of the first embodiment. The blocked isocyanate prepolymer composition is characterized in that it is thermally cured by heating at a predetermined temperature. The isocyanate-reactive compound may be a similar one to the isocyanate-reactive compound in the first embodiment.

### <Manufacturing Method of Blocked Isocyanate Prepolymer Composition>

The method for manufacturing the blocked isocyanate prepolymer composition of the present embodiment is the same as the manufacturing method of the blocked isocyanate prepolymer composition of the first embodiment. As in the case of the first embodiment, it may be embodied as one of the resin type, the aqueous slurry type, and the aqueous dispersion type.

### <Curing Temperature of Blocked Isocyanate Prepolymer Composition>

The curing temperature of the blocked isocyanate prepolymer composition of the present embodiment is equal to the dissociation temperature (that depends on the thermally dissociative blocking agent to be used) of the blocked isocyanate compound contained therein (that is, it is equal to the dissociation temperature of the ammonium-salt-based thermally dissociative blocking agent that is used as the thermally dissociative blocking agent in the present embodiment). It is in the temperature range of 60 to 150 degrees centigrade.

### <Curing Time of Blocked Isocyanate Prepolymer Composition>

In the blocked isocyanate prepolymer composition of the present embodiment, the thermally dissociative blocking agent in the blocked isocyanate compound contained therein is the ammonium-salt-based thermally dissociative blocking agent. A curing time thereof is in a time range of about 20 to about 180 seconds (in case of using MDI as the isocyanate) and in a time range of about 20 to about 1 hour (in case of using IPDI as the isocyanate).

### WORKING EXAMPLES

Shown hereafter respectively are methods for manufacturing a blocked isocyanate composition (manufacturing examples) and methods for manufacturing a blocked isocyanate prepolymer composition (manufacturing examples) according to working examples of the present invention, as well as methods for manufacturing a blocked isocyanate composition (manufacturing examples) and methods for manufacturing a blocked isocyanate prepolymer composition (manufacturing examples) according to comparative examples. The blocked isocyanate compositions and the blocked isocyanate prepolymer compositions according to the working examples of the present invention as well as characteristic functions and effects thereof are described in a specific manner, while being compared with the blocked isocyanate compositions and the blocked isocyanate prepolymer compositions according to the comparative examples. In the following, "parts" and "%" are "parts by weight" and "% by weight", unless otherwise specified.

### [COMPARATIVE EXAMPLE 1]

### a) First Step

First, 100 parts of ε-caprolactam was heated in an open reaction vessel to 90 degrees centigrade to be melted. Then, 100 parts of diphenylmethane diisocyanate (MDI) was gradually added therein over 1 hour, thereby obtaining a blocked isocyanate (blocked isocyanate according to Comparative Example 1) that was solid at a room temperature (reaction temperature of 25 degrees centigrade). A recovery rate of the blocked isocyanate of Comparative Example 1 was 95%.

### b) Second Step

Next, 100 parts of the blocked isocyanate of Comparative Example 1 was dispersed and mixed with a solution obtained by adding 25% polyvinyl alcohol aqueous solution so as to have a solid content ratio of 60 parts (i.e. 100 parts of blocked isocyanate was mixed with an aqueous solution composed of 60 parts of polyvinyl alcohol and 180 parts of water as shown in TABLE 1), thereby preparing an aqueous solution 1. The aqueous solution 1 was poured into a mold and molded and dried to obtain a molded product 1 (for Comparative Example 1). Next, the molded product 1 was heated and cured at 150 degrees centigrade for 30 minutes to obtain a cured product 1 (for Comparative Example 1). Next, this cured product 1 was immersed in a warm water at a hot water temperature of 70 degrees centigrade for 24 hours and then rinsed with a water, thereafter being dried to obtain a sample (specimen) 1 (for Comparative Example 1). Next, this sample 1 was pulverized in a ball mill for 1 hour to obtain a light brown prepolymer resin. As a result of observing a particle size distribution of this resin under an optical microscope, a maximum particle size was 20 micrometers (µm). Moreover, the sample 1 had a gel fraction of 55% and a swelling ratio of 156%. In addition, an odor at the time of thermal curing when obtaining the cured product 1 was ε caprolactam odor.

### [COMPARATIVE EXAMPLE 2]

### a) First Step

First, 100 parts of a saturated sodium hydrogen sulfite solution (42%) and 20 parts of a dioxane were put in a separable flask equipped with a reflux condenser. Then, a temperature thereof was maintained at 25 degrees centigrade, while it was stirred at 1000rpm.

### b) Second Step

Next, 100 parts of a diphenylmethane diisocyanate (MDI) was gradually added into the separable flask over 1 hour, thereby obtaining a blocked isocyanate solution that was a liquid at a room temperature (reaction temperature of 25 degrees centigrade). The blocked isocyanate solution was dried in a vacuum at 50 degrees centigrade, thereby obtaining a solid blocked isocyanate (blocked isocyanate of Comparative Example 2). A recovery rate of the blocked isocyanate of Comparative Example 2 was 90%.

### c) Third Step

Next, 100 parts of the blocked isocyanate of Comparative Example 2 was dispersed and mixed with a solution obtained by adding 25% polyvinyl alcohol aqueous solution so as to have a solid content ratio of 60 parts (i.e. 100 parts of blocked isocyanate was mixed with an aqueous solution composed of 60 parts of polyvinyl alcohol and 180 parts of water as shown in TABLE 1), thereby preparing an aqueous solution 2. The aqueous solution 2 was poured into a mold and molded and dried to obtain a molded product 2 (for Comparative Example 2). Next, the molded product 2 was heated and cured at 150 degrees centigrade for 30 minutes to obtain a cured product 2 (for Comparative Example 2). Next, this cured product 2 was immersed in a warm water at a hot water temperature of 70 degrees centigrade for 24 hours and then rinsed with a water, thereafter being dried to obtain a sample (specimen) 2 (for Comparative Example 2). Next, this sample 2 was pulverized in a ball mill for 1 hour to obtain a light brown prepolymer resin. As a result of observing a particle size distribution of this resin under an optical microscope, a maximum particle size was 20 micrometers (µm). Moreover, the sample 2 had a gel fraction of 93% and a swelling ratio of 117%. In addition, an odor at the time of thermal curing when obtaining the cured product 2 was sulfite odor.

### [COMPARATIVE EXAMPLE 3]

### a) First Step

First, 100 parts of potassium hydrogen carbonate solution (85%) and 20 parts of acetone were put in a separable flask equipped with a reflux condenser. Then, a temperature thereof was maintained at 25 degrees centigrade, while it was stirred at 1000rpm.

### b) Second Step

Next, 100 parts of a diphenylmethane diisocyanate (MDI) was gradually added into the separable flask over 1 hour, thereby obtaining a blocked isocyanate solution that was a liquid at a room temperature (reaction temperature of 25 degrees centigrade). The blocked isocyanate solution was dried in a vacuum at 50 degrees centigrade, thereby obtaining a solid blocked isocyanate (blocked isocyanate of Comparative Example 3). A recovery rate of the blocked isocyanate of Comparative Example 3 was 93%.

### c) Third Step

Next, 100 parts of the blocked isocyanate of Comparative Example 3 was dispersed and mixed with a solution obtained by adding 25% polyvinyl alcohol aqueous solution so as to have a solid content ratio of 60 parts (i.e. 100 parts of blocked isocyanate was mixed with an aqueous solution composed of 60 parts of polyvinyl alcohol and 180 parts of water as shown in TABLE 1), thereby preparing an aqueous solution 3. The aqueous solution 3 was poured into a mold and molded and dried to obtain a molded product 3 (for Comparative Example 3). Next, the molded product 3 was heated and cured at 150 degrees centigrade for 30 minutes to obtain a cured product 3 (for Comparative Example 3). Next, this cured product 3 was immersed in a warm water at a hot water temperature of 70 degrees centigrade for 24 hours and then rinsed with a water, thereafter being dried to obtain a sample (specimen) 3 (for Comparative Example 3). Next, this sample 3 was pulverized in a ball mill for 1 hour to obtain a light brown prepolymer resin. As a result of observing a particle size distribution of this resin under an optical microscope, a maximum particle size was 20 micrometers (µm). Moreover, the sample 3 had a gel fraction of 85% and a swelling ratio of 135%. In addition, an odor at the time of thermal curing when obtaining the cured product 3 was odorless.

### [COMPARATIVE EXAMPLE 4]

### a) First Step

First, 100 parts of potassium hydrogen carbonate solution (85%) and 20 parts of dioxane were put in a separable flask equipped with a reflux condenser. Then, a temperature thereof was maintained at 25 degrees centigrade, while it was stirred at 1000rpm.

### b) Second Step

Next, 100 parts of a diphenylmethane diisocyanate (MDI) was gradually added into the separable flask over 1 hour, thereby obtaining a blocked isocyanate solution that was a liquid at a room temperature (reaction temperature of 25 degrees centigrade). The blocked isocyanate solution was dried in a vacuum at 50 degrees centigrade, thereby obtaining a solid blocked isocyanate (blocked isocyanate of Comparative Example 4). A recovery rate of the blocked isocyanate of Comparative Example 4 was 95%.

### c) Third Step

Next, 100 parts of the blocked isocyanate of Comparative Example 4 was dispersed and mixed with a solution obtained by adding 25% polyvinyl alcohol aqueous solution so as to have a solid content ratio of 60 parts (i.e. 100 parts of blocked isocyanate was mixed with an aqueous solution composed of 60 parts of polyvinyl alcohol and 180 parts of water as shown in TABLE 1), thereby preparing an aqueous solution 4. The aqueous solution 4 was poured into a mold and molded and dried to obtain a molded product 4 (for Comparative Example 4). Next, the molded product 4 was heated and cured at 150 degrees centigrade for 30 minutes to obtain a cured product 4 (for Comparative Example 4). Next, this cured product 4 was immersed in a warm water at a hot water temperature of 70 degrees centigrade for 24 hours and then rinsed with a water, thereafter being dried to obtain a sample (specimen) 4 (for Comparative Example 4). Next, this sample 4 was pulverized in a ball mill for 1 hour to obtain a light brown prepolymer resin. As a result of observing a particle size distribution of this resin under an optical microscope, a maximum particle size was 20 micrometers (µm). Moreover, the sample 4 had a gel fraction of 88% and a swelling ratio of 123%. In addition, an odor at the time of thermal curing when obtaining the cured product 4 was odorless.

### [WORKING EXAMPLE 1]

### a) First Step

First, 60 parts of 28% aqueous ammonia and 20 parts of a dioxane (as aprotic polar organic solvent) were put in a separable flask equipped with a reflux condenser. Then, a temperature thereof was maintained at 25 degrees centigrade, while it was stirred at 1000rpm.

### b) Second Step

Next, 100 parts of a diphenylmethane diisocyanate (MDI) was gradually added into the separable flask over 1 hour, thereby obtaining a blocked isocyanate solution that was a liquid at a room temperature(reaction temperature of 25 degrees centigrade). The blocked isocyanate solution was dried in a vacuum at 60 degrees centigrade, thereby obtaining a solid blocked isocyanate (blocked isocyanate of Working Example 1). A recovery rate of the blocked isocyanate of Working Example 1 was 92%.

### c) Third Step

Next, 100 parts of the blocked isocyanate of Working Example 1 was dispersed and mixed with a solution obtained by adding 25% polyvinyl alcohol aqueous solution so as to have a solid content ratio of 60 parts (i.e. 100 parts of blocked isocyanate was mixed with an aqueous solution composed of 60 parts of polyvinyl alcohol and 180 parts of water as shown in TABLE 1), thereby preparing an aqueous solution 5. The aqueous solution 5 was poured into a mold and molded and dried to obtain a molded product 5 (for Working Example 1). Next, the molded product 5 was heated and cured at 150 degrees centigrade for 30 minutes to obtain a cured product 5 (for Working Example 1). Next, this cured product 5 was immersed in a warm water at a hot water temperature of 70 degrees centigrade for 24 hours and then rinsed with a water, thereafter being dried to obtain a sample (specimen) 5 (for Working Example 1). Next, this sample 5 was pulverized in a ball mill for 1 hour to obtain a light brown prepolymer resin. As a result of observing a particle size distribution of this resin under an optical microscope, a maximum particle size was 20 micrometers (µm). Moreover, the sample 5 had a gel fraction of 90% and a swelling ratio of 132%. In addition, a light ammonia odor (a fine odor of ammonia) was confirmed as an odor at the time of thermal curing when obtaining the cured product 5.

The rinsing treatment of the cured product 5 is a treatment for washing away an extra ammonia (NH₃) on the surface of the cured product 5. Thereby, it becomes easy to confirm the terminal structure of the cured product 5 by FT-IR or the like.

### [WORKING EXAMPLE 2]

### a) First Step

First, 40 parts of 28% aqueous ammonia and 20 parts of a dioxane (as aprotic polar organic solvent) were put in a separable flask equipped with a reflux condenser. Then, a temperature thereof was maintained at 25 degrees centigrade, while it was stirred at 1000rpm.

### b) Second Step

Next, 100 parts of a diphenylmethane diisocyanate (MDI) was gradually added into the separable flask over 1 hour, thereby obtaining a blocked isocyanate solution that was a liquid at a room temperature(reaction temperature of 25 degrees centigrade). The blocked isocyanate solution was dried in a vacuum at 60 degrees centigrade, thereby obtaining a solid blocked isocyanate (blocked isocyanate of Working Example 2). A recovery rate of the blocked isocyanate of Working Example 2 was 95%.

### c) Third Step

Next, 100 parts of the blocked isocyanate was dispersed and mixed with a solution obtained by adding 25% polyvinyl alcohol aqueous solution so as to have a solid content ratio of 60 parts (i.e. 100 parts of blocked isocyanate was mixed with an aqueous solution composed of 60 parts of polyvinyl alcohol and 180 parts of water as shown in TABLE 1), thereby preparing an aqueous solution 6. The aqueous solution 6 was poured into a mold and molded and dried to obtain a molded product 6 (for Working Example 2). Next, the molded product 6 was heated and cured at 150 degrees centigrade for 30 minutes to obtain a cured product 6 (for Working Example 2). Next, this cured product 6 was immersed in a warm water at a hot water temperature of 70 degrees centigrade for 24 hours and then rinsed with a water, thereafter being dried to obtain a sample (specimen) 6 (for Working Example 2). Next, this sample 6 was pulverized in a ball mill for 1 hour to obtain a light brown prepolymer resin. As a result of observing a particle size distribution of this resin under an optical microscope, a maximum particle size was 20 micrometers (µm). Moreover, the sample 6 had a gel fraction of 95% and a swelling ratio of 110%. In addition, a light ammonia odor (a fine odor of ammonia) was confirmed as an odor at the time of thermal curing when obtaining the cured product 6.

### [WORKING EXAMPLE 3]

### a) First Step

First, 60 parts of 28% aqueous ammonia and 20 parts of a dioxane (as aprotic polar organic solvent) and 20 parts of (amphiphilic) acetone were put in a separable flask equipped with a reflux condenser. Then, a temperature thereof was maintained at 25 degrees centigrade by a reflux condenser, while it was stirred at 1000rpm.

### b) Second Step

Next, 100 parts of a diphenylmethane diisocyanate (MDI) was gradually added into the separable flask over 1 hour, thereby obtaining a blocked isocyanate solution that was a liquid at a room temperature(reaction temperature of 25 degrees centigrade). The blocked isocyanate solution was dried in a vacuum at 60 degrees centigrade, thereby obtaining a solid blocked isocyanate (blocked isocyanate of Working Example 3). A recovery rate of the blocked isocyanate of Working Example 3 was 93%.

### c) Third Step

Next, 100 parts of the blocked isocyanate was dispersed and mixed with a solution obtained by adding 25% polyvinyl alcohol aqueous solution so as to have a solid content ratio of 60 parts (i.e. 100 parts of blocked isocyanate was mixed with an aqueous solution composed of 60 parts of polyvinyl alcohol and 180 parts of water as shown in TABLE 1), thereby preparing an aqueous solution 7. The aqueous solution 7 was poured into a mold and molded and dried to obtain a molded product 7 (for Working Example 3). Next, the molded product 7 was heated and cured at 150 degrees centigrade for 30 minutes to obtain a cured product 7 (for Working Example 3). Next, this cured product 7 was immersed in a warm water at a hot water temperature of 70 degrees centigrade for 24 hours and then rinsed with a water, thereafter being dried to obtain a sample (specimen) 7 (for Working Example 3). Next, this sample 7 was pulverized in a ball mill for 1 hour to obtain a light brown prepolymer resin. As a result of observing a particle size distribution of this resin under an optical microscope, a maximum particle size was 20 micrometers (µm). Moreover, the sample 7 had a gel fraction of 90% and a swelling ratio of 132%. In addition, a light ammonia odor (a fine odor of ammonia) was confirmed as an odor at the time of thermal curing when obtaining the cured product 7.

### [WORKING EXAMPLE 4]

### a) First Step

First, 40 parts of 28% aqueous ammonia and 20 parts of a dioxane (as aprotic polar organic solvent) and 20 parts of (amphiphilic) acetone were put in a separable flask equipped with a reflux condenser. Then, a temperature thereof was maintained at 25 degrees centigrade by a reflux condenser, while it was stirred at 1000rpm.

### b) Second Step

Next, 100 parts of a diphenylmethane diisocyanate (MDI) was gradually added into the separable flask over 1 hour, thereby obtaining a blocked isocyanate solution that was a liquid at a room temperature(reaction temperature of 25 degrees centigrade). The blocked isocyanate solution was dried in a vacuum at 60 degrees centigrade, thereby obtaining a solid blocked isocyanate (blocked isocyanate of Working Example 4). A recovery rate of the blocked isocyanate of Working Example 4 was 94%.

### c) Third Step

Next, 100 parts of the blocked isocyanate was dispersed and mixed with a solution obtained by adding 25% polyvinyl alcohol aqueous solution so as to have a solid content ratio of 60 parts (i.e. 100 parts of blocked isocyanate was mixed with an aqueous solution composed of 60 parts of polyvinyl alcohol and 180 parts of water as shown in TABLE 1), thereby preparing an aqueous solution 8. The aqueous solution 8 was poured into a mold and molded and dried to obtain a molded product 8 (for Working Example 4). Next, the molded product 8 was heated and cured at 150 degrees centigrade for 30 minutes to obtain a cured product 8 (for Working Example 4). Next, this cured product 8 was immersed in a warm water at a hot water temperature of 70 degrees centigrade for 24 hours and then rinsed with a water, thereafter being dried to obtain a sample (specimen) 8 (for Working Example 4). Next, this sample 8 was pulverized in a ball mill for 1 hour to obtain a light brown prepolymer resin. As a result of observing a particle size distribution of this resin under an optical microscope, a maximum particle size was 20 micrometers (µm). Moreover, the sample 8 had a gel fraction of 95% and a swelling ratio of 110%. In addition, a light ammonia odor (a fine odor of ammonia) was confirmed as an odor at the time of thermal curing when obtaining the cured product 8.

### [Comparison of Comparative Examples 1-4 and Working Examples 1-4]

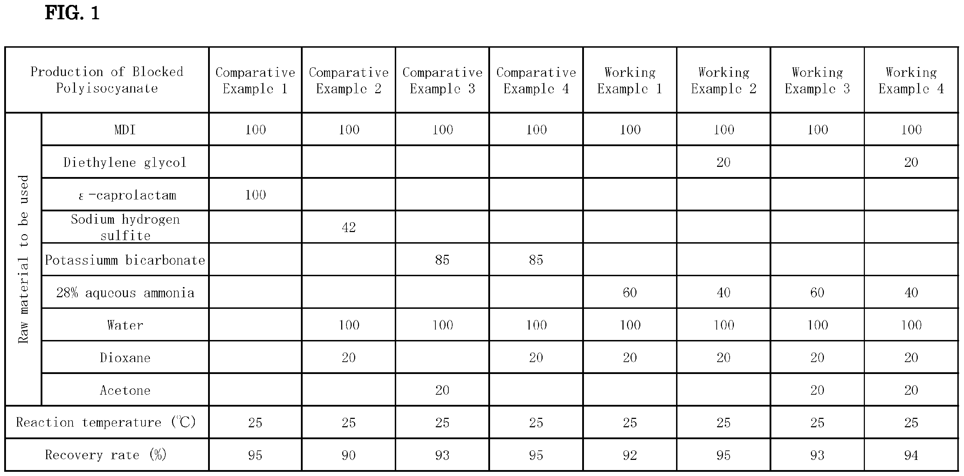

On Comparative Examples 1-4 and Working Examples 1-4, TABLE of FIG. 1 shows a raw material to be used, a mixing ratio (parts by weight), a reaction temperature (maintaining temperature of the aqueous solvent during obtaining the blocked isocyanate solution from the first step to the second step or from the first step to the third step (i.e. reaction temperature for obtaining the blocked isocyanate solution)), and a recovery rate thereof for manufacture of the blocked isocyanate composition (that are prepared in steps from the aforementioned first step to the second step or from the aforementioned first step to the third step).

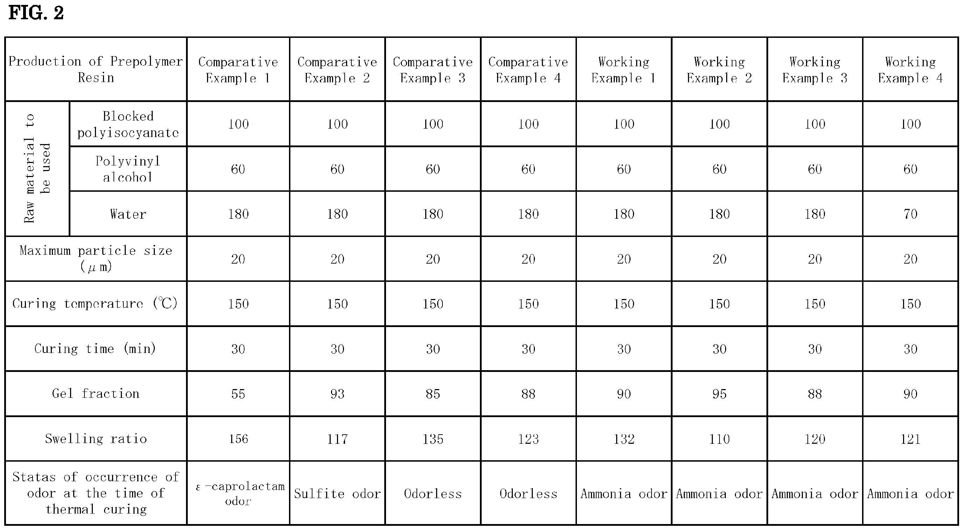

On Comparative Examples 1 to 4 and Working Examples 1 to 4, TABLE of FIG. 2 shows a raw material to be used, a mixing ratio (parts by weight), a maximum particle size, a curing temperature, a curing time, a gel fraction, a swelling ratio, a result of occurrence of generated gas and odor at the time of manufacture or at the time of thermal curing for manufacture of the resin type of blocked isocyanate prepolymer composition (that is prepared in the third step). The curing temperature was a temperature when it reached an intrinsic viscosity with a temperature rise of 10 degrees centigrade per minute in a rheometer. Moreover, the curing time was a time from a start of viscosity increase until it reaches an intrinsic viscosity.

According to the experimental results for the blocked isocyanate compositions of Working Examples 1-4 of the present invention, it was confirmed that it was possible to manufacture the thermally dissociative blocking agent, which was capable of thermally dissociating in a low temperature range that was a temperature range equivalent to the aforementioned curing temperature (i.e. a low temperature range that is a temperature range of 125 degrees centigrade to 136 degrees centigrade but that is thought to be a temperature range of nearly about 120 degrees centigrade to about 140 degrees centigrade if considering errors or the like in the testing conditions or the measurement or the like), at a high recovery rate of 90% to 95% (i.e. 90% or more), by making the ammonia of the aqueous ammonia as the thermally dissociative blocking agent react with the isocyanate compound (MDI of Working Examples 1 to 4) in the aqueous solvent that was added with the aforementioned polar organic solvent and that had the reaction temperature adjusted at 25 degrees centigrade. As the combination of the blocked isocyanate compound and the thermally dissociative blocking agent, Working Examples 1-4 use a combination of the MDI and the ammonia. However, similar effects can be expected also in case the ammonium salt is used as the thermally dissociative blocking agent and, in addition, even with the other combinations (i.e. even in case of using something other than the MDI as the blocked isocyanate compound and using the ammonia or the ammonium salt as the thermally dissociative blocking agent).

In particular, it was confirmed that, in Working Examples 1 to 4, it was possible to manufacture the thermally dissociative blocked isocyanate composition which was dissociable at a low temperature (in which the curing temperature becomes 150 degrees centigrade), at a recovery rate of 95% or 94% that was relatively high (among Comparative Examples 1-4 and Working Examples 1-4), by reacting the MDI with the ammonia in the aqueous solvent in which the dioxane or the combination of the dioxane and the acetone was added as the polar organic solvent, while the reaction temperature being adjusted to 25 degrees centigrade, and in which the diethylene glycol (DEG) was added.

Moreover, it was confirmed that the resin type of blocked isocyanate prepolymer composition made by pulverizing 100 parts of the obtained (solid) blocked isocyanate and 60 parts of polyvinyl alcohol (PVC) to 20 micrometers or less (i.e. the blocked isocyanate prepolymer compositions of Working Examples 1-4) completed curing in a tremendously short curing time of 30 seconds (that is thought to be a curing time in a time range of about 25 seconds to about 35 seconds if considering errors or the like in the testing conditions or the measurement or the like) in the temperature range of very low temperature at 150 degrees centigrade (that is thought to be a temperature range of nearly about 145 degrees centigrade to about 155 degrees centigrade if considering errors or the like in the testing conditions or the measurement or the like).

### [Generated Gas and Odor]

According to the experimental results on the generated gas and odor for the block isocyanate prepolymer compositions of Working Examples 1 to 4, it was confirmed that the generated gas at the time of production was only an ammonia gas in each of Working Examples 1 to 4. Moreover, it was confirmed that the status of occurrence of the odor at the time of thermal curing was a slight ammonia odor (a fine odor of ammonia) in each of Working Examples 1-4.

### [Diffusion Amount of Formaldehyde]

The present inventors measured an amount of diffusion of formaldehyde on a phenolic resin one day after a molding and a thermosetting plastic manufactured by the method of Working Examples 1 to 4 in accordance with JIS_A1901. As a result, a detected aldehyde concentration was 0.035 (mg/m²·65°C·2h) on the phenol resin, however, a value of the thermosetting plastic was 0.000 (mg/m²·65°C ·2h) and could not be detected. This value is lower than 0.005 (mg/m²·65°C·2h) that is an industry standard in the strictest automotive interior parts, and it was available for all uses having a regulation.

### [Alkali Resistance]

The present inventors immersed a phenolic resin one day after a molding and a thermosetting plastic manufactured by the method of Working Examples 1 to 4 in a caustic soda (50% solution) at an ordinary temperature for 24 hours and observed their change (resistance to discoloration against a sodium hydroxide solution that is a strongly-alkaline aqueous solution). As a result, significant discoloration was observed in the phenolic resin, however, no discoloration was observed in the thermosetting plastic of the present invention at all.

### [Solvent Resistance]

The inventors immersed a phenolic resin one day after a molding and a thermosetting plastic manufactured by the method of Working Examples 1 to 4 in an acetone at an ordinary temperature for 24 hours and observed their change. However, no change was observed on both. Thus, it was confirmed that the thermosetting plastic of the present invention had a weather resistance (solvent resistance) equal to or higher than the phenolic resin.

### [Working Examples of Embodiment 2]

The aforementioned Working Examples 1 to 5 are the examples on the blocked isocyanate composition and the blocked isocyanate prepolymer composition according to Embodiment 1 of the present invention (examples of respective manufacturing methods). As described above, in the blocked isocyanate composition according to the present invention, both in the case of using the ammonia of the embodiment 1 and in the case of using the predetermined ammonium salt of the embodiment 2, as the thermal dissociating blocking agent, in either case, when the isocyanate compound and the NH₃-type thermally dissociative blocking agent are mixed and stirred in the aforementioned predetermined solvent (such as an aqueous solvent to which a polar organic solvent is added), the ammonia group (NH₃) is dissociated from the NH₃-type thermally dissociative blocking agent in the solvent, so that the ammonia group (NH₃) blocks the NCO group of the isocyanate compound. Moreover, in either case, when the blocked isocyanate composition is heated at a temperature equal to or higher than the thermal dissociation temperature of the NH₃-based thermally dissociable blocking agent, as shown in the above chemical formula (4), the primary amine of the terminal primary amine structure is dissociated to reproduce the isocyanate group and the ammonia (NH₃). Thus, the isocyanate compound reacts with the isocyanate-reactive compound to be cured. That is, in the blocked isocyanate composition according to the present invention, regardless of whether the ammonia of Embodiment 1 is used or the predetermined ammonium salt of Embodiment 2 is used as the thermally dissociable blocking agent, in both cases, they have the same reaction at the time of blocking the NCO group as well as the same terminal structure. Moreover, the curing reaction at the time of thermal dissociation by heating is also the same.

In order to confirm the above points, Working Examples on production of a blocked isocyanate composition and a blocked isocyanate prepolymer composition according to Embodiment 2 of the present invention (Working Examples of respective manufacturing methods) will be described. Then explained are confirmation results by confirmation tests on the terminal structure of the blocked isocyanate composition that was obtained by those Working Examples.

### [Examples of Manufacturing Method of Embodiment 2]

First, Working Examples 5 and 6 will be described as examples (manufacturing examples) of the manufacturing method of the blocked isocyanate composition according to Embodiment 2. The manufacturing method of the blocked isocyanate composition according to Embodiment 2 is the same manufacturing method as the manufacturing method of the blocked isocyanate composition according to Embodiment 1 except that it uses a predetermined ammonium salt in place of the ammonia as the thermally dissociable blocking agent, as described in the following Working Example 5 and Working Example 6. Moreover, the blocked isocyanate composition according to Embodiment 2 (one that uses the ammonium salt as the thermally dissociable blocking agent) that is obtained by the manufacturing method has the same terminal structure as the blocked isocyanate composition according to Embodiment 1 (that uses the ammonia as the dissociative blocking agent).

### [Working Example 5]

The blocked isocyanate composition according to Working Example 5 uses the ammonium hydrogen carbonate (NH₄HCO₃) as a preferred example among the predetermined ammonium salts listed in the aforementioned Embodiment 2, as a NH₃-based thermally dissociative blocking agent (i.e. as the ammonium-salt-based thermally dissociative blocking agent) of the blocked isocyanate composition of the Embodiment 2 of the present invention. Moreover, the blocked isocyanate composition according to Working Example 5 uses the diphenylmethane diisocyanate (MDI) as the isocyanate compound. That is, the blocked isocyanate composition of Working Example 5 uses the ammonium hydrogen carbonate (NH₄HCO₃) as the thermally dissociative blocking agent and uses the diphenylmethane diisocyanate (MDI) as the isocyanate compound. Working Example 5 that uses the ammonium salt (ammonium hydrogen carbonate) as the thermally dissociative blocking agent is a working example corresponding to Working Example 1 that uses the ammonia (ammonia water) as the thermally dissociative blocking agent.

### a) First Step

In manufacturing the blocked isocyanate composition according to Working Example 5, first, in a thermally dissociative blocking agent solution preparation step (first step), 100 parts by weight of a saturated ammonium hydrogen carbonate solution (20% concentration) (as a predetermined amount of an ammonium-salt-based thermally dissociative blocking agent) was dissolved into an aqueous solution, which contains (by addition) 20 parts by weight of dioxane (as an aprotic polar organic solvent), in a separable flask equipped with a reflux condenser (as a predetermined container), thereby preparing a thermally dissociative blocking agent solution. Then, the thermally dissociative blocking agent solution had a temperature thereof maintained at 25 degrees centigrade (as a constant temperature), while being stirred at 1000rpm (as a constant stirring rate) with a stirring device. As the ammonium hydrogen carbonate, "ammonium hydrogen carbonate" (product number: 01274-00) manufactured by Kanto Kagaku Co., Ltd. was used. As the dioxane, "1,4-dioxane" (product number: 10425-01) manufactured by Kanto Kagaku Co., Ltd. was used.

### b) Second Step

Next, in a blocked isocyanate composition preparation step (second step), 100 parts of a diphenylmethane diisocyanate (MDI) (as a predetermined amount of isocyanate compound) was gradually added into the thermally dissociative blocking agent solution, which was kept at 25 degrees centigrade in the separable flask, over 1 hour (as a predetermined time), while being dripped by a predetermined dripping device and stirred with a stirrer, thereby obtaining a blocked isocyanate solution that was a liquid at an ordinary temperature (reaction temperature of 25 degrees centigrade). As the diphenylmethane diisocyanate (MDI), "MDI-PM 200" (PM 200) manufactured by Wanhua Chemical Japan Co., Ltd. was used.

Next, the blocked isocyanate solution was dried by a drier in a vacuum at 60 degrees centigrade (as a predetermined drying temperature), thereby obtaining a solid blocked isocyanate composition (blocked isocyanate composition of Working Example 5). A recovery rate of the blocked isocyanate composition of Working Example 5 was 94%. An addition amount of the ammonium hydrogen carbonate in the blocked isocyanate composition is, as described above, within the range of "addition amount of thermally dissociable blocking agent" in the blocked isocyanate composition of the present invention (within a range of 0.1 to 2.0 mol per 1 mol of the isocyanate compound in terms of NCO content).

### c) Third Step

Next, 100 parts of the blocked isocyanate of Working Example 5 was dispersed and mixed with a solution obtained by adding 25% polyvinyl alcohol aqueous solution so as to have a solid content ratio of 60 parts (i.e. 100 parts of blocked isocyanate was mixed with an aqueous solution composed of 60 parts of polyvinyl alcohol and 180 parts of water in the same manner as the Working Example 1), thereby preparing an aqueous solution 9. The aqueous solution 9 was poured into a mold and molded and dried to obtain a molded product 9 (for Working Example 5). Next, the molded product 9 was heated and cured at 150 degrees centigrade for 30 minutes to obtain a cured product 9 (for Working Example 5). Next, this cured product 9 was immersed in a warm water at a hot water temperature of 70 degrees centigrade for 24 hours and then rinsed with a water, thereafter being dried to obtain a sample (specimen) 9 (for Working Example 5). Next, this sample 9 was pulverized in a ball mill for 1 hour to obtain a light brown prepolymer resin. As a result of observing a particle size distribution of this resin under an optical microscope, a maximum particle size was 20 micrometers (µm). Moreover, the sample 9 had a gel fraction of 90% and a swelling ratio of 132%. In addition, a light ammonia odor (a fine odor of ammonia) was confirmed as an odor at the time of thermal curing when obtaining the cured product 9.

### [Working Example 6]

The blocked isocyanate composition according to Working Example 6 uses the ammonium hydrogen carbonate (NH₄HCO₃) as a preferred example among the predetermined ammonium salts listed in the aforementioned Embodiment 2, as a NH₃-based thermally dissociative blocking agent (i.e. as the ammonium-salt-based thermally dissociative blocking agent) of the blocked isocyanate composition of the Embodiment 2 of the present invention, as in Working Example 5. Moreover, the blocked isocyanate composition according to Working Example 6 uses the isophorone diisocyanate (IPDI), in place of the diphenylmethane diisocyanate (MDI), as the isocyanate compound. That is, the blocked isocyanate composition of Working Example 6 uses the ammonium hydrogen carbonate (NH₄HCO₃) as the thermally dissociative blocking agent and uses the isophorone diisocyanate (IPDI) as the isocyanate compound.

### a) First Step

In manufacturing the blocked isocyanate composition according to Working Example 6, first, in a thermally dissociative blocking agent solution preparation step (first step), 100 parts by weight of a saturated ammonium hydrogen carbonate solution (20% concentration) (as a predetermined amount of an ammonium-salt-based thermally dissociative blocking agent) was dissolved into an aqueous solution, which contains (by addition) 20 parts by weight of dioxane (as an aprotic polar organic solvent), in a separable flask equipped with a reflux condenser (as a predetermined container), thereby preparing a thermally dissociative blocking agent solution. Then, the thermally dissociative blocking agent solution had a temperature thereof maintained at 25 degrees centigrade (as a constant temperature), while being stirred at 1000rpm (as a constant stirring rate) with a stirring device. As the ammonium hydrogen carbonate, "ammonium hydrogen carbonate" (product number: 01274-00) manufactured by Kanto Kagaku Co., Ltd. was used. As the dioxane, "1,4-dioxane" (product number: 10425-01) manufactured by Kanto Kagaku Co., Ltd. was used.

### b) Second Step

Next, in a blocked isocyanate composition preparation step (second step), 100 parts of an isophorone diisocyanate (IPDI) (as a predetermined amount of isocyanate compound) was gradually added into the thermally dissociative blocking agent solution, which was kept at 25 degrees centigrade in the separable flask, over 1 hour (as a predetermined time), while being dripped by a predetermined dripping device and stirred with a stirrer, thereby obtaining a blocked isocyanate solution that was a liquid at an ordinary temperature (reaction temperature of 25 degrees centigrade). As the isophorone diisocyanate (IPDI), a product (product number: 10314) manufactured by Tokyo Chemical Industry Co., Ltd. was used.

Next, the blocked isocyanate solution was dried by a drier in a vacuum at 60 degrees centigrade (as a predetermined drying temprature), thereby obtaining a solid blocked isocyanate composition (blocked isocyanate composition of Working Example 6). A recovery rate of the blocked isocyanate composition of Working Example 6 was 94%. An addition amount of the ammonium hydrogen carbonate in the blocked isocyanate composition is, as described above, within the range of "addition amount of thermally dissociable blocking agent" in the blocked isocyanate composition of the present invention as recited in paragraph [0033] of the specification of the present application (within a range of 0.1 to 2.0 mol per 1 mol of the isocyanate compound in terms of NCO content).

### [Confirmation of Terminal Structure of Embodiment 2 (Working Examples 5 and 6)]

With respect to the blocked isocyanate composition according to Working Example 5 and the blocked isocyanate composition according to Working Example 6 as examples, in which the ammonium hydrogen carbonate was used as the thermally dissociative blocking agent, that correspond to the blocked isocyanate composition of the above-described Embodiment 2, it was confirmed as follows that the terminal structure of the blocked isocyanate composition of Embodiment 2 was same as the terminal structure of the blocked isocyanate composition of Embodiment 1, respectively, by confirming the terminal structure by NMR measurement.

Specifically, results of NMR measurements of the blocked isocyanate composition of Working Example 5 and results of NMR measurement results of the blocked isocyanate composition of Working Example 6 were compared respectively with results of NMR measurement results of the aforementioned Working Example 1 that uses the aqueous ammonia as the thermally dissociative blocking agent. Then, it was confirmed that the blocked isocyanate compositions of Working Example 5 and Working Example 6 had the same terminal structure (urea terminal) as that of the blocked isocyanate of Working Example 1, because the measurement results of the both Examples became equal.

That is, NMR measurements were performed on the blocked isocyanate composition according to Working Example 5 and on the blocked isocyanate composition according to Working Example 6, respectively. As a result, it was confirmed that, in 1H-NMR, a signal originating from -NH₂- was confirmed at 5.8 to 6.1 ppm and a signal originating from -NH- was confirmed in the vicinity of 7.7 to 7.9 ppm. Also, in the 13C-NMR, a signal of a structure (-NH-CO-NH-CO-NH-), which was presumed to have an amide connected with -NH-, was confirmed in the vicinity of 156 ppm. However, a signal of the urea at 152 to 154 ppm was not confirmed.

This analysis result was the same as the analysis result of the aforementioned Working Example 1 (example corresponding to Embodiment 1) in which the aqueous ammonia was used as the thermally dissociative blocking agent.

Therefore, it was confirmed that the terminal structure of the blocked isocyanate composition according to Working Example 5 and the terminal structure of the blocked isocyanate composition according to Working Example 6 (that use the ammonium hydrogen carbonate as the thermally dissociative blocking agent) were both the same urea terminal as the terminal structure of Working Example 1 that uses the ammonia water as the thermally dissociative blocking agent.

### [Conclusion]

As described above, the blocked isocyanate composition according to Embodiment 2 using the ammonium salt (for example, the ammonium hydrogen carbonate as a preferred example) as the thermally dissociative blocking agent, could be manufactured by the same method as the manufacturing method of the blocked isocyanate composition according to Embodiment 1 (using the ammonia as the thermally dissociative blocking agent), in each case of using MDI as the isocyanate compound (Working Example 5) and using IPDI (Working Example 6). Moreover, it was confirmed that the terminal structure of the blocked isocyanate composition according to Working Example 5 and the terminal structure of the blocked isocyanate composition according to Working Example 6 were both the same urea terminal structure as the terminal structure of the blocked isocyanate composition according to Working Example 1.

### [Function and Effect]

As described above, Working Example 5 and Working Example 6 can be manufactured by the same manufacturing method as Working Example 1. Moreover, their terminal structures are the same. Therefore, the blocked isocyanate composition according to Embodiment 2 that uses the ammonium salt as the thermally blocking agent and that has a scope including Working Example 5 and Working Example 6, is capable of performing the same functions and effects as the blocked isocyanate composition according to Embodiment 1 that has a scope including Working Examples 1 to 4 (functions and effects as described by comparing Working Examples 1 to 4 with Comparative Examples 1 to 3).

### [Details of Terminal Structure Confirmation Test]

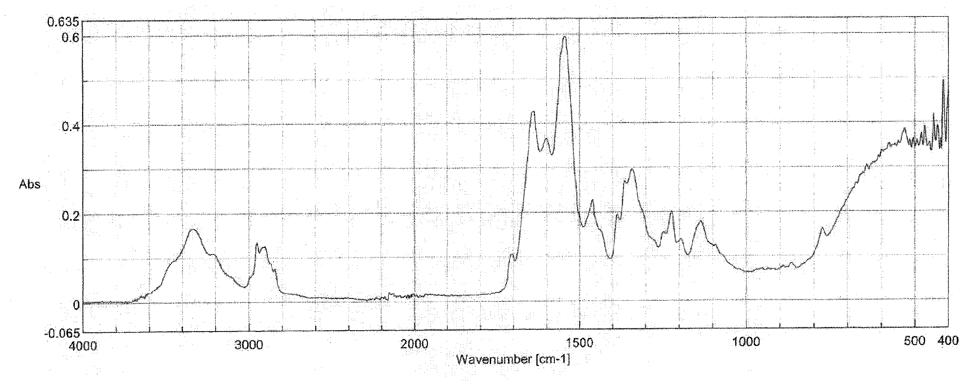

Details of the terminal structure confirmation tests and the experiment results relating to the above-described Working Example 5 and Working Example 6 will be described in detail with reference to experimental data (materials) on the basis of FIG. 3 to FIG. 24. That is, the following shows the description of the confirmation tests and the experimental results on the block by the urea terminal in the blocked isocyanate composition that uses the ammonium salt as the thermally dissociative blocking agent.

### [Experimental Description]

### a) Overview

For Working Example 5 and Working Example 6 corresponding to Embodiment 2, the terminal structure of the blocked isocyanate composition using the ammonium salt as the thermally dissociative blocking agent was confirmed by a method similar to the confirmation method (experimental method) of the terminal structure of the blocked isocyanate composition using the ammonia as the thermally dissociable blocking agent (i.e. corresponding to Embodiment 1), among the blocked isocyanate compositions of the present invention. That is, it was confirmed in a specific manner that the blocked isocyanate composition produced by using the ammonium salt as the thermally dissociative blocking agent (i.e. corresponding to Embodiment 2) blocked the isocyanate group of the isocyanate composition by the urea terminal, in the same manner as the blocked isocyanate composition of Embodiment 1.

### b) Analytical Method

The FT-IR test, the thermal scan FT-IR test, and the NMR test (H-NMR test and C-NMR test) were used as an analysis method (test method) for analyzing the structure of the blocked isocyanate composition of Working Example 5 and Working Example 6 corresponding to Embodiment 2. Then, the analysis results of respective analysis methods were judged in a comprehensive manner, thereby finally confirming the terminal functional group and the terminal structure of the blocked isocyanate composition of Embodiment 2.

### c) Samples of Present Invention

As samples for confirming the terminal functional group and the terminal structure of the blocked isocyanate composition of Embodiment 2 (referred to as "inventive sample according to Embodiment 2" hereinafter), the blocked isocyanate composition according to Working Example 5 and the blocked isocyanate composition according to Working Example 6 were used.

The reason why the block isocyanate composition according to Working Example 5 and the block isocyanate composition according to Working Example 6 were used as the inventive samples according to Embodiment 2, is as follows. That is, as explained in the description of "Confirmation by Experimental Results" of the terminal structure of the blocked isocyanate composition according to the aforementioned present invention, it is required to determine infrared absorption spectra in the vicinity of 1535 cm⁻¹ by FT-IR, as one reason for confirming the urea terminal. However, in Working Example 5 (using MDI as the isocyanate compound), since absorption by a phenyl group of MDI exists at 1500 to 1600 cm⁻¹, it overlaps with the infrared absorption spectrum around 1535 cm⁻¹ by the urea terminal. Thus, the analysis becomes difficult.

Therefore, the blocked isocyanate composition of Working Example 6 was used as the inventive sample according to Embodiment 2 for confirming the infrared absorption spectrum around 1535 cm⁻¹ by the urea terminal. That is, in the analysis by FT-IR, since the blocked isocyanate composition using IPDI as the isocyanate compound (Working Example 6) enables the analysis more easily. Thus, the block isocyanate composition of Working Example 6 was used (for the analysis by FT-IR). For the same reason, in the description of "Confirmation by Experimental Results" of the terminal structure of the blocked isocyanate composition according to the aforementioned present invention, the analysis was conducted on the blocked isocyanate composition using IPDI as the isocyanate compound for confirming the urea terminal, as described above.

On the other hand, in the analysis by NMR, many signals originating from IPDI appear in case of the blocked isocyanate composition using IPDI as the isocyanate compound (Working Example 6), it becomes difficult to determine the signal attributable to the urea terminal. That is, in the analysis by NMR, the analysis will be more easily conducted in case of using the blocked isocyanate composition using MDI as the isocyanate compound (Working Example 5). For this reason, the blocked isocyanate composition of Working Example 5 was used (for the analysis by NMR).

In this way, for convenience of the analysis of the terminal structure, two kinds of the blocked isocyanate composition according to Working Example 5 and the blocked isocyanate composition according to Working Example 6 were properly used, according to the analytical method, as the inventive sample according to Embodiment 2.

### [Comparative Sample]

As comparative samples for confirming the terminal structure of the aforementioned inventive sample according to Embodiment 2, the following two kinds of samples (Comparative Sample 1 and Comparative Sample 2) were manufactured and used. That is, the samples according to the following two kinds of blocked isocyanate compositions (Comparative Sample 1 and Comparative Sample 2) were respectively produced by the same manufacturing method as the manufacturing method of the blocked isocyanate composition of the aforementioned Embodiment 1. Then they were used in the confirmation experiments of the terminal structure. Comparative Sample 1 uses the ammonia water as the thermally dissociative blocking agent, while using MDI as the isocyanate compound. In this sense, it is a comparative sample corresponding to the sample of Working Example 5 (that uses the ammonium hydrogen carbonate as the thermally dissociative blocking agent, while using MDI as the isocyanate compound). Comparative Sample 2 uses the ammonia water as the thermally dissociative blocking agent, while using IPDI as the isocyanate compound. In this sense, it is a comparative sample corresponding to the sample of Working Example 6 (that uses the ammonium hydrogen carbonate as the thermally dissociative blocking agent, while using IPDI as the isocyanate compound).

### [Comparative Sample 1]

Comparative Sample 1 is a blocked isocyanate composition using the aqueous ammonia (NH₄OH) as the thermally dissociative blocking agent and the diphenylmethane diisocyanate (MDI) as the isocyanate compound.

### [Comparative Sample 2]

Comparative Sample 2 is a blocked isocyanate composition using the aqueous ammonia (NH₄OH) as the thermally dissociative blocking agent and the isophorone diisocyanate (IPDI) as the isocyanate compound.

### [Confirmation Method of Terminal Structure]

### <Confirmation of Terminal Structure by comparison with Working Example 1>

As a method of confirming the terminal structure of the inventive samples according to Embodiment 2 (Working Example 5 and Working Example 6), analysis data about the terminal structures of the inventive samples according to Embodiment 2 (Working Example 5 and Working Example 6) were respectively compared with the analysis data about the terminal structures of the comparative samples (Comparative Sample 1 and Comparative Sample 2) according to Embodiment 1. Thereby, it was confirmed that the terminal structure of the inventive samples according to Embodiment 2 (Working Example 5 and Working Example 6) was the same urea terminal as the terminal structure of the comparative samples (Comparative Sample 1 and Comparative Sample 2) according to Embodiment 1. That is, the terminal structure of the comparative samples (Comparative Sample 1 and Comparative Sample 2) which are the block isocyanate compositions using the ammonia water as the thermally dissociative blocking agent, is the terminal structure (urea terminal) in which the urea terminal blocks the isocyanate group, as described on the blocked isocyanate composition of Embodiment 1 (and Working Examples 1 to 4). Therefore, by proving the similarity of the analysis data on the terminal structure of the inventive samples according to Embodiment 2 (Working Example 5 and Working Example 6), which are the blocked isocyanate compositions using the ammonium salt as the thermally dissociative blocking agent, with the analysis data on the terminal structure of the comparative examples (Comparative Sample 1 and Comparative Sample 2), it was confirmed, as a result, that the terminal structures of the inventive samples according to Embodiment 2 (Working Example 5 and Working Example 6) was the same urea terminal as the terminal structure of the comparative samples (Comparative Sample 1 and Comparative Sample 2).

Specifically, the terminal structure was confirmed using each analysis method (FT-IR, thermal scan FT-IR, NMR (H-NMR, C-NMR)) as described below.

### a) Confirmation Experiment by FT-IR

In the confirmation experiment by FT-IR, the infrared absorption spectra were analyzed by FT-IR analyzer (Fourier transform infrared spectrophotometer) respectively on the sample of Working Example 5 and the sample of Working Example 6 as the inventive sample according to Embodiment 2 as well as Comparative Sample 1 and Comparative Sample 2 as the comparative samples. Then, the terminal structure (block of NCO group by the urea terminal) of each of the samples was confirmed.

### b) Confirmation Experiment by Thermal Scan FT-IR

In the confirmation experiment by the thermal scan FT-IR, the infrared absorption spectra were analyzed in a temperature-rise/temperature-fall process by the thermal scanning FT-IR analyzer (thermal scanning infrared spectrophotometer), respectively on the sample of Working Example 5 and the sample of Working Example 6 as the inventive sample according to Embodiment 2 as well as Comparative Sample 1 and Comparative Sample 2 as the comparative samples. Then, the terminal structure (block of NCO group by the urea terminal) of each of the samples and the reproduction of NCO group (accompanying the dissociation of the urea terminal) were confirmed.

### c) Confirmation Experiment by NMR (H-NMR, C-NMR)

In the confirmation experiment by NMR (H-NMR, C-NMR), NMR spectra (signals) were analyzed by the NMR analyzer (nuclear magnetic resonance apparatus), respectively on the sample of Working Example 5 and the sample of Working Example 6 as the inventive sample according to Embodiment 2 as well as Comparative Sample 1 and Comparative Sample 2 as the comparative samples. Then, the terminal structure (block of NCO group by the urea terminal) of each of the samples was confirmed.

Thereafter, the analysis results by the various analysis methods (FT-IR, thermal scan FT-IR, NMR (H-NMR, C-NMR)) on the inventive samples according to Embodiment 2 (Working Example 5 and Working Example 6) were compared with the analysis results by the corresponding analysis methods on Sample A (corresponding to Working Example 5) and Sample B (corresponding to Working Example 6). Thereby, it was confirmed that the inventive samples according to Embodiment 2 (Working Example 5 and Working Example 6) had the same terminal structure (i.e. urea terminal) as Sample A and Sample B (in which the urea terminal was confirmed as the terminal structure), by confirming the analysis results thereof becoming the same.

### [Outline of Experiment Result]

As a result of the confirmation tests, by proving the similarity of the analysis data on the terminal structure of the inventive samples according to Embodiment 2 (Working Example 5 and Working Example 6), which are the blocked isocyanate compositions using the ammonium salt as the thermally dissociative blocking agent, with the analysis data on the terminal structure of the comparative examples (Comparative Sample 1 and Comparative Sample 2), it was confirmed, as a result, that the terminal structures of the inventive samples according to Embodiment 2 (Working Example 5 and Working Example 6) was the same urea terminal (i.e. the structure of the aforementioned general formula (1)) as the terminal structure of the comparative samples (Comparative Sample 1 and Comparative Sample 2).

### [Details of Experiment Result]

Details of the experiment results by each analysis method are as follows.

### a) Confirmation Experiment Results of Inventive Samples (Working Example 5 and Working Example 6) according to Embodiment 2

### a1) Confirmation Experiment Result by FT-IR of Working Example 6

First, as shown in the chart of the FT-IR analysis data in FIG. 3, based on the analysis results by the FT-IR on the blocked isocyanate composition according to Working Example 6 among the inventive samples according to Embodiment 2, in the blocked isocyanate composition according to Working Example 6, an infrared absorption spectrum appeared in the vicinity of 1535 cm⁻¹ that was considered to be an amide group (-NH-CO-), while an infrared absorption spectrum appearing near 1645 cm⁻¹ that was considered to be an urea (-NH-CO-NH-) or a primary amine (-NH₂-), whereas an infrared absorption spectrum of the isocyanate group (-NCO) near 2240 cm⁻¹ disappeared.

### a2) Confirmation Experiment Result by Thermal Scan FT-IR of Working Example 6

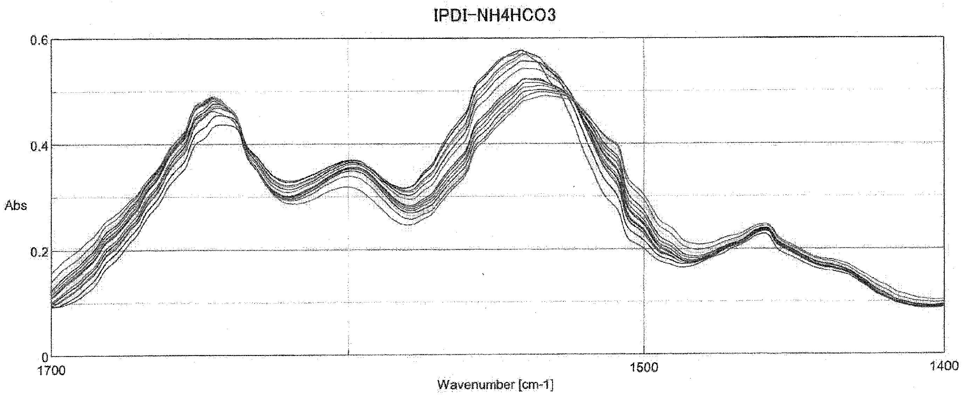

As shown in the chart of the thermal scan FT-IR analysis data in FIG. 4, based on the analysis results by the thermal scan FT-IR on the blocked isocyanate composition according to Working Example 6 among the inventive samples according to Embodiment 2, in the blocked isocyanate composition according to Working Example 6, the infrared absorption spectrum considered to be the amide group in the vicinity of 1535 cm⁻¹ continuously decreased at a temperature of 80 degrees centigrade or higher. Thus, it is interpreted that the infrared absorption spectrum of the amide group changed due to dissociation of the primary amine, which was bonded to the amide group, by heating. (Since the infrared absorption spectrum of the isocyanate group near 2240 cm⁻¹ continuously increased at a temperature of 80 degrees centigrade or higher, it was confirmed that the isocyanate group was regenerated by heating.)

### a3) Result of Confirmation Experiment by NMR (H-NMR, C-NMR) of Working Example 5

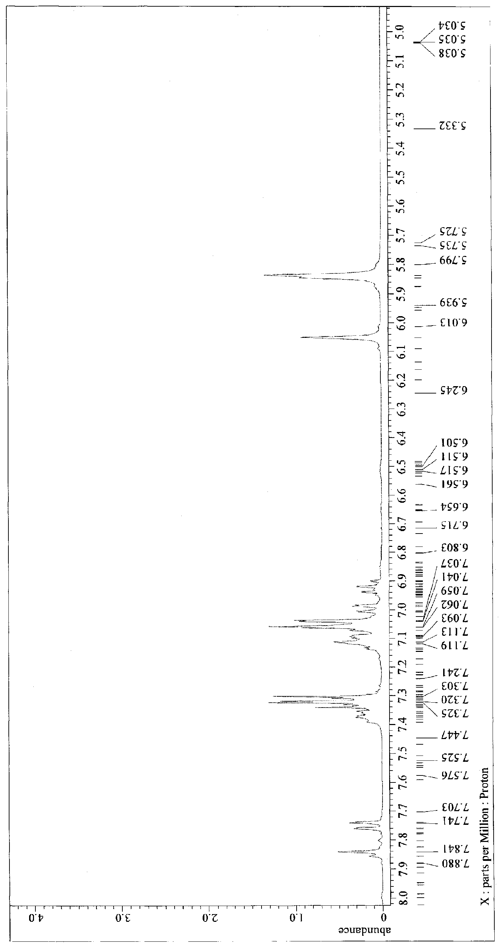

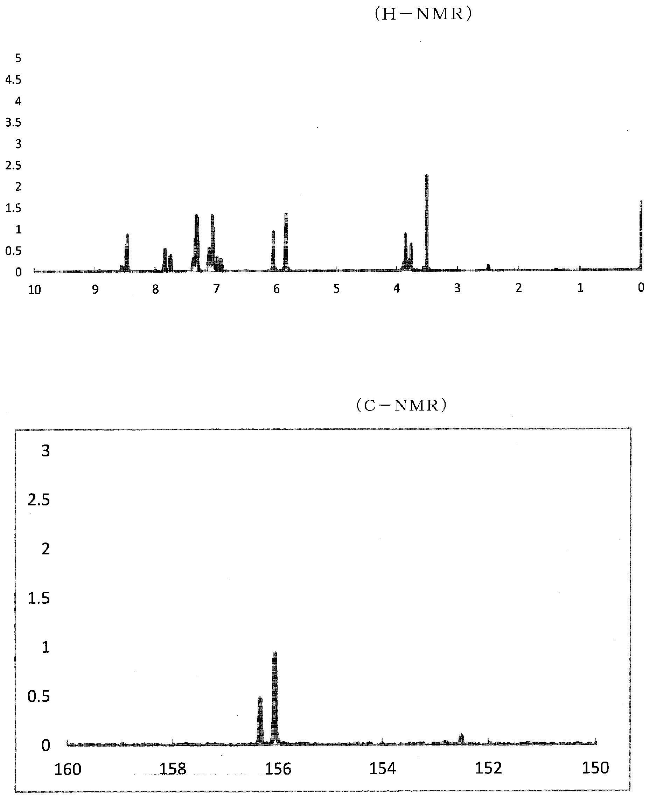

As shown in the chart of the H-NMR analysis data of FIG. 7 and the chart of the H-NMR analysis data of FIG. 9, among the inventive samples according to Embodiment 2, based on the analysis results by H-NMR on the blocked isocyanate composition of Working Example 5, a signal of the primary amine (-NH₂) was determined at 5.8 to 6.2 ppm, while a signal of the secondary amine (-NH-) being determined near 7.7 to 7.9 ppm in the blocked isocyanate composition according to Working Example 5. In the chart of FIG. 7, the main data range is extracted from the H-NMR analysis data of the blocked isocyanate composition of Working Example 5. The chart of FIG. 9 schematically shows the H-NMR analysis data of the blocked isocyanate composition of Working Example 5 (with a wider data range than the chart of FIG. 7).

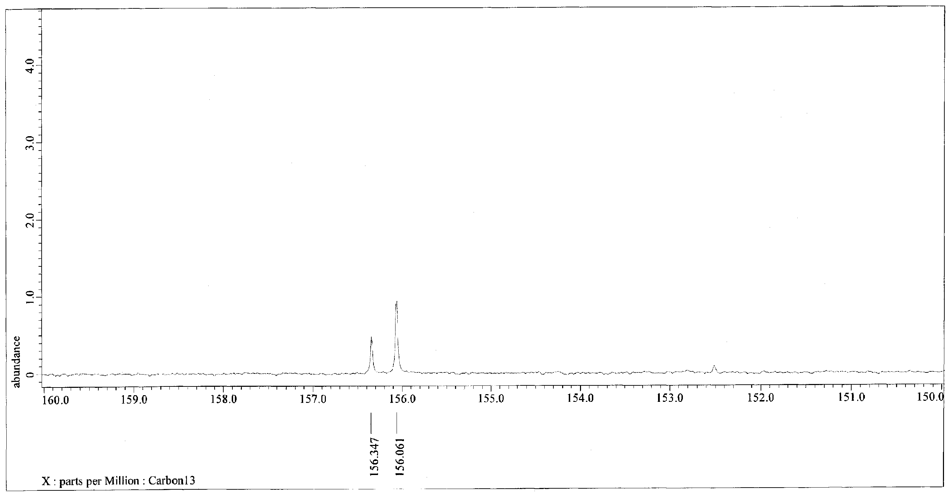

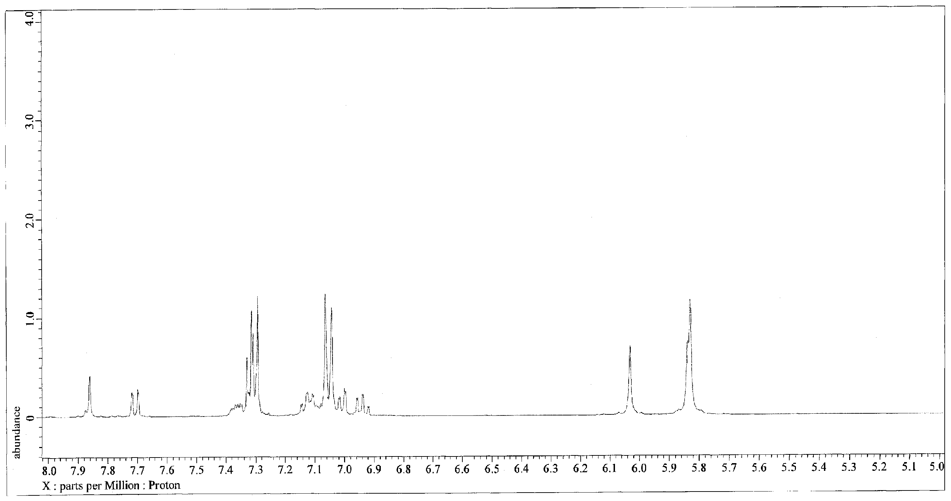

Further, as shown in the chart of the C-NMR analysis data of FIG. 8 and the chart of the C-NMR analysis data of FIG. 10, based on the analysis results by the C-NMR on the blocked isocyanate composition of Working Example 5, a signal of a structure (-NH-CO-NH-CO-NH-), which was presumed to link the amide (-NH-CO-) with the secondary amine (-NH-), was determined in the vicinity of 156 ppm, but no signal of the urea (-NH-CO-NH-) was confirmed at 152 to 154 ppm, in the blocked isocyanate composition according to Working Example 5. In the chart of FIG. 8, the main data range is extracted from the C-NMR analysis data (overall data) of the blocked isocyanate composition according to Working Example 5. Further, the chart of FIG. 10 schematically shows C-NMR analysis data of the blocked isocyanate composition according to Working Example 5 (in the same data range as the chart of FIG. 8).

### a4) Infrared Absorption Spectrum around 1645 cm⁻¹ of Inventive Sample by FT-IR

According to the analysis by C-NMR, the signal of the structure (-NH-CO-NH-CO-NH-), which was presumed to link the amide (-NH-CO-) with the secondary amine (-NH-), was determined in the vicinity of 156 ppm, but no signal of the urea (-NH-CO-NH-) was confirmed at 152 to 154 ppm, in the blocked isocyanate composition according to Working Example 5. Thus, it is inferred that the infrared absorption spectrum in the vicinity of 1645 cm⁻¹ of the inventive sample according to Embodiment 2 (Working Example 6) by FT-IR is not derived from the urea (-NH-CO-NH-) but derived from the primary amine (-NH₂-).

### b) Verification Experiment Results of Comparative Sample (Comparative Sample 2, Comparative Sample 3)

### b1) Confirmation Experiment Result of Comparative Sample 2 by FT-IR

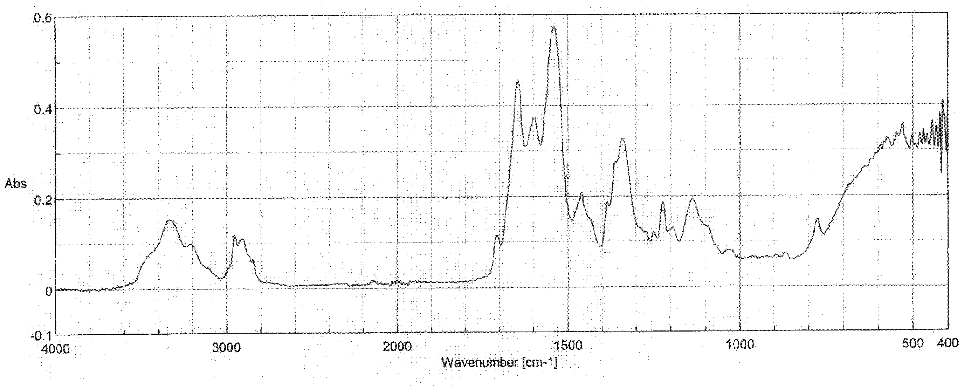

As shown in the chart of the FT-IR analysis data of FIG. 5, based on the analysis results by the FT-IR on the Comparative Sample 2, in the blocked isocyanate composition according to Comparative Sample 2, an infrared absorption spectrum appeared in the vicinity of 1535 cm⁻¹ that was considered to be an amide group (-NH-CO-), while an infrared absorption spectrum appearing near 1645 cm⁻¹ that was considered to be an urea (-NH-CO-NH-) or a primary amine (-NH₂-), whereas an infrared absorption spectrum of the isocyanate group (-NCO) near 2240 cm⁻¹ disappeared.

That is, the experimental result by FT-IR on Comparative Sample 2 was the same as the experimental result by FT-IR on the inventive sample according to Embodiment 2 (Working Example 6) as described above.

### b2) Confirmation Experiment Result of Comparative Sample 2 by Thermal Scan FT-IR

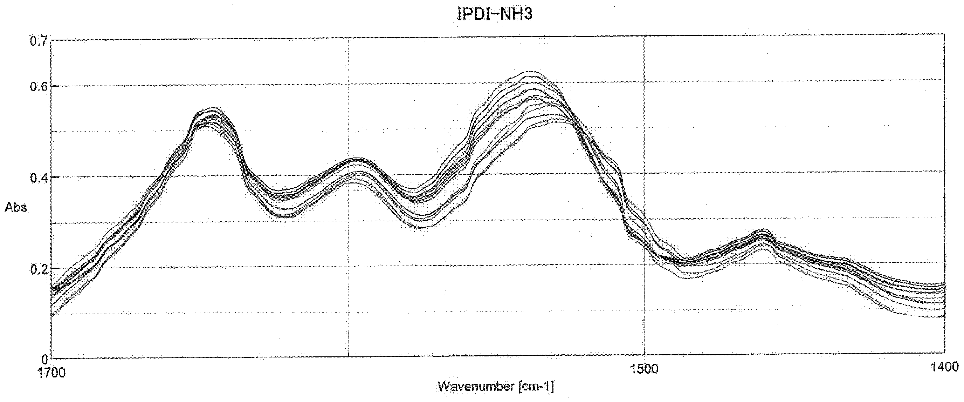

As shown in the chart of the thermal scan FT-IR analysis data in FIG. 6, based on the analysis results of the thermal scan FT-IR on Comparative Sample 2, in the blocked isocyanate composition according to Comparative Sample 2, the infrared absorption spectrum considered to be the amide group in the vicinity of 1535 cm⁻¹ continuously decreased at a temperature of 80 degrees centigrade or higher. Thus, it is interpreted that the infrared absorption spectrum of the amide group changed due to dissociation of the primary amine, which was bonded to the amide group, by heating. (Since the infrared absorption spectrum of the isocyanate group near 2240 cm⁻¹ continuously increased at a temperature of 80 degrees centigrade or higher, it was confirmed that the isocyanate group was regenerated by heating.)

That is, the experimental result of the thermal scanning FT-IR on this Comparative Sample 2 was the same as the experimental result by the thermal scan FT-IR on the inventive sample according to Embodiment 2 (Working Example 5) as described above.

### b3) Confirmation Experiment Results of Comparative Sample 1 by NMR (H-NMR, C-NMR)

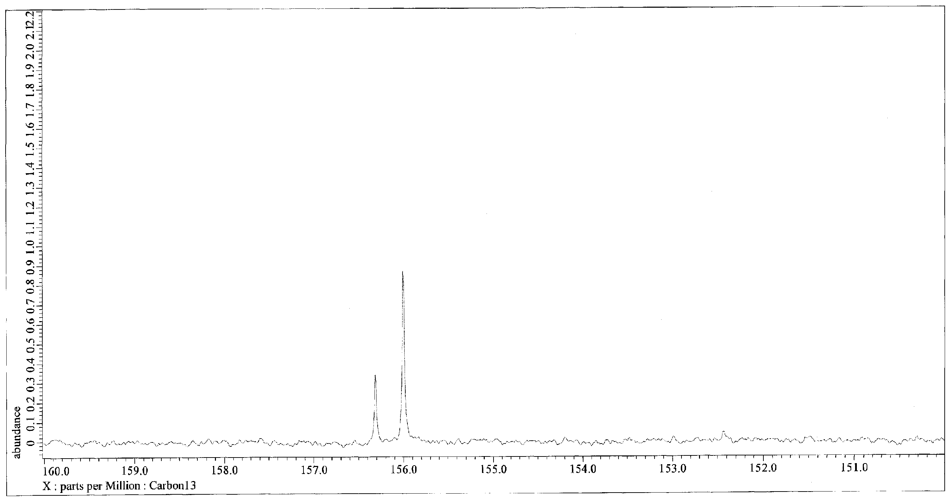

As shown in the chart of the H-NMR analysis data of FIG. 11, based on the analysis result by H-NMR on Comparative Sample 1, in the block isocyanate composition according to Comparative Sample 1, a signal of the primary amine (-NH₂) was determined at 5.8 to 6.2 ppm, while a signal of the secondary amine (-NH-) being determined near 7.7 to 7.9 ppm in the blocked isocyanate composition according to Working Example 5.

Also, as shown in the chart of C-NMR analysis data in FIG. 12, based on the analysis results by C-NMR on Comparative Sample 1, in the blocked isocyanate composition according to Comparative Sample 1, a signal of a structure (-NH-CO-NH-CO-NH-), which was presumed to link the amide (-NH-CO-) with the secondary amine (-NH-), was determined in the vicinity of 156 ppm, but no signal of the urea (-NH-CO-NH-) was confirmed at 152 to 154 ppm.

That is, the experimental results by NMR (H-NMR, C-NMR) on this Comparative Sample 1 was the same as the experimental result by NMR (H-NMR, C-NMR) on the inventive sample according to Embodiment 2 (Working Example 5) as described above.

### b4) Infrared Absorption Spectrum around 1645 cm⁻¹ of Comparative Sample by FT-IR

According to analysis by C-NMR, the signal of the structure (-NH-CO-NH-CO-NH-), which was presumed to link the amide (-NH-CO-) with the secondary amine (-NH-), was determined in the vicinity of 156 ppm, but no signal of the urea (-NH-CO-NH-) was confirmed at 152 to 154 ppm, in the blocked isocyanate composition according to Comparative Sample 1. Thus, it is inferred that the infrared absorption spectrum in the vicinity of 1645 cm⁻¹ of Comparative Sample 2 by FT-IR is not derived from the urea (-NH-CO-NH-) but derived from the primary amine (-NH₂-).

That is, the infrared absorption spectra in the vicinity of 1645 cm⁻¹ of the comparative samples (Comparative Sample 1, Comparative Sample 2) and the Inventive Samples according to Embodiment 2 (Working Example 5, Working Example 6) are both considered to be derived not from the urea (-NH-CO-NH-) but derived from the primary amine (-NH₂-).

### c) Specific Confirmation of Terminal Structure of Inventive Samples according to Embodiment 2

As is clear if it is judged in a comprehensive manner on the basis of the analysis result by the FT-IR, the analysis result by the thermal scan FT-IR and the analysis result by the NMR (H-NMR, C-NMR), it was specifically confirmed that the blocked isocyanate composition of the inventive sample according to Embodiment 2 (Working Example 5, Working Example 6), which used the ammonium salt (ammonium hydrogen carbonate) as the thermally dissociative blocking agent, had the terminal structure being the same urea terminal as the blocked isocyanate composition according to the comparative samples (Comparative Sample 1, Comparative Sample 2), which used the ammonia (aqueous ammonia) as the thermally dissociable blocking agent (i.e. to have the terminal structure to be the structural urea terminal of the above general formula (1)) and that the urea terminal blocked the isocyanate group of the isocyanate compound.

### [Conclusion]

As described above, the experimental results of the inventive samples (Working Examples 5 and 6), which uses the ammonium salt as the thermally dissociative blocking agent, are the same as the experimental results of the comparative samples (Comparative Sample 1, Comparison Sample 2), which uses the ammonia as the thermally dissociative blocking agent. Thus, it is confirmed that the blocked isocyanate composition of the present invention using the ammonium salt as the thermally dissociative blocking agent has the terminal structure to be the same urea terminal as the blocked isocyanate composition of the present invention which uses the ammonia as the thermally dissociable blocking agent.

### INDUSTRIAL APPLICABILITY

The blocked isocyanate composition and the prepolymer composition of the present invention is applicable to heat insulation materials, plywoods, wooden boards, electrical products, automotive interior parts, or the like in which an insulation strength is required.

## Claims

1. A blocked isocyanate composition synthesized from an isocyanate compound and a thermally dissociative blocking agent,
**characterized in that**
the thermally dissociative blocking agent is at least one kind of thermally dissociative blocking agent selected from a group consisting of an ammonia and an ammonium salt, and
the thermally dissociative blocking agent blocks an isocyanate group of the isocyanate compound by an urea terminal.

2. A blocked isocyanate composition as recited in claim 1 **characterized in that** the thermally dissociative blocking agent is an ammonia.

3. A blocked isocyanate composition as recited in claim 1 **characterized in that** the thermally dissociative blocking agent is an ammonium salt.

4. A blocked isocyanate composition as recited in one of claims 1 to 3 **characterized in that** an addition amount of the thermally dissociative blocking agent is 0.1 to 2.0 mol to 1 mol of the isocyanate compound in terms of an NCO group content

5. A blocked isocyanate composition as recited in one of claims 1 to 4 **characterized in that** a dissociation temperature of the thermally dissociative blocking agent is in a range of 60 to 150 degrees centigrade.

6. A blocked isocyanate composition as recited in one of claims 1 to 5 **characterized in that** the isocyanate compound comprises a chain-extended isocyanate compound that blocks the isocyanate group by the urea terminal and that chain-extends molecular chains thereof with each other by a chain extender.

7. A blocked isocyanate composition as recited in one of claims 1 to 5 **characterized in that** the isocyanate compound comprises a non-chain-extended isocyanate compound that blocks the isocyanate group by the urea terminal without chain-extending molecular chains thereof by a chain extender.

8. A method of manufacturing a blocked isocyanate composition as recited in one of claims 1 to 7 in an aqueous solution,
**characterized in that**
the aqueous solvent comprises either a water or an aqueous mixed solvent combining a water with a polar organic solvent, and
an addition amount of the polar organic solvent is in a range of 1 to 500 parts by weight to 100 parts by weigh of the water in case the aqueous solvent consists of the aqueous mixed solvent.

9. A manufacturing method of a blocked isocyanate composition as recited in claim 8 **characterized in that** a temperature of the aqueous mixed solvent is in a temperature range of 0 to 60 degrees centigrade.

10. A thermally dissociative blocking agent for a blocked isocyanate composition that blocks an isocyanate group of the isocyanate compound,
**characterized in that**
it consists of at least one kind selected from a group consisting of an ammonia and an ammonium salt, and
it blocks an isocyanate group of the isocyanate compound by an urea terminal.

11. A blocked isocyanate composition synthesized from an isocyanate compound and a thermally dissociative blocking agent in a solvent,
**characterized in that**
the thermally dissociative blocking agent is an ammonia-based thermally dissociative blocking agent that dissociates NH₃ group in the solvent, and
the thermally dissociative blocking agent blocks an isocyanate group of the isocyanate compound by a terminal structure represented by a following formula, -R-NH-CO-NH₂.

12. A blocked isocyanate composition as recited in claim 11 **characterized in that** the thermally dissociative blocking agent consists of an ammonium salt of an organic acid.

13. A blocked isocyanate composition as recited in claim 12 **characterized in that** the thermally dissociative blocking agent consists of an ammonium acetate or an ammonium oxalate.

14. A blocked isocyanate composition as recited in one of claims 11 to 13 **characterized in that** a dissociation temperature of the thermally dissociative blocking agent is in a range of 60 to 150 degrees centigrade.
